# EUROPEAN PATENT APPLICATION

(11) **EP 4 794 087 A1**
(43) Date of publication of application: **19.08.2026**
(21) Application number: 24877018.2
(22) Date of filing: 24.09.2024
(51) Int. Cl.: H01M 50/271, H01M 50/204, H01M 50/209, H01M 50/276, H01M 50/30

(54) **BATTERY PACK, STRUCTURE, AND METHOD FOR MANUFACTURING MICA PLATE**

(30) Priority: 12.10.2023 JP 2023176825
(71) Applicant: IBIDEN CO., LTD., Ogaki-shi, Gifu 503-8604 (JP)
(72) Inventor: MUKAIYAMA, Kenji, Ibi-gun, Gifu 501-0695 (JP); ANDO, Hisashi, Ibi-gun, Gifu 501-0695 (JP); ICHIHARA, Hiroki, Ibi-gun, Gifu 501-0695 (JP); YAMAMOTO, Yuya, Ibi-gun, Gifu 501-0695 (JP)
(74) Representative: Hoefer & Partner Patentanwälte mbB
(86) International application number: PCT/JP2024/033920
(87) International publication number: WO 2025/079419

(57) **Abstract**

Provided is a battery pack including a mica plate that is resistant to damage and is lightweight. The battery pack of the present invention includes a module with a plurality of battery cells; a case containing the module; and a mica plate disposed between the module and the case and having a first main face and a second main face opposite to the first main face, the battery pack further including a fixing member to fix the mica plate, the mica plate having a first fixing member hole penetrating from the first main face to the second main face, at least one of the module or the case being provided with a connecting member having a second fixing member hole, the fixing member including a head and a body extending from the head, the head of the fixing member being on the first main face of the mica plate, the body of the fixing member passing through the first fixing member hole into the second fixing member hole, thereby fixing the mica plate, the head, in a planar perspective view of the mica plate, covering at least a part of an outline of the first fixing member hole and overlapping the mica plate, an overlapping area, denoted as area S 1, between the head and the mica plate being not less than 5.8 × 10⁻⁶ times an area S2 of the mica plate.

## Description

### TECHNICAL FIELD

The present invention relates to battery packs, structures, and methods for producing mica plates.

### BACKGROUND ART

A battery pack including a module with a plurality of battery cells and a case containing the module may generate gas or flame in the event of thermal runaway. Such gas or flame may spread to the surroundings, potentially inducing further thermal runaway.

In order to prevent the spread of gas or flame during thermal runaway, Patent Literature 1 discloses a battery pack including a module having a mica plate on its surface.

Specifically, Patent Literature 1 discloses a battery pack comprising a battery module and a mica plate for heat insulation, wherein the mica plate is removably fixed to the battery module by a connecting member and covers a plurality of the battery modules; the connecting member is divided into two parts, an upper part and a lower part, with the upper part of the connecting member fixing the mica plate to one of the battery modules, while the lower part of the connecting member penetrating the battery module to fix the battery module to a lower housing; a supporting member to support the mica plate is disposed between the mica plate and the battery modules, the supporting member being fixed to the upper part of the connecting member; and a wear-resistant material is disposed between the mica plate and a holder to prevent wear loss of the holder and the mica plate, the wear-resistant material being attached to the mica plate and completely covering the holder.

### CITATION LIST

### - Patent Literature

Patent Literature 1: CN 218334011 U

### SUMMARY OF INVENTION

### - Technical Problem

Weight reduction of battery packs has been demanded to enhance the handleability of battery packs.

The presence of a mica plate in a battery pack at a position described in Patent Literature 1 poses a problem of increasing the weight of the battery pack.

The weight of a battery pack like the one in Patent Literature 1 may be reduced by thinning the mica plate.

In Patent Literature 1, however, the mica plate is fixed to the battery module using a rivet, and in this case an impact on the battery pack causes high stress around the rivet hole.

Therefore, simply thinning the mica plate reduces the strength of the mica plate, unfortunately making the surrounding area of the rivet hole susceptible to damage.

The present invention has been made to solve the above problems. The present invention aims to provide a battery pack including a mica plate that is resistant to damage and is lightweight.

### - Solution to Problem

Specifically, a battery pack according to a first aspect of the present invention includes: a module with a plurality of battery cells; a case containing the module; and a mica plate disposed between the module and the case and having a first main face and a second main face opposite to the first main face, the battery pack further including a fixing member to fix the mica plate, the mica plate having a first fixing member hole penetrating from the first main face to the second main face, at least one of the module or the case being provided with a connecting member having a second fixing member hole, the fixing member including a head and a body extending from the head, the head of the fixing member being on the first main face of the mica plate, the body of the fixing member passing through the first fixing member hole into the second fixing member hole, thereby fixing the mica plate, the head, in a planar perspective view of the mica plate, covering at least a part of an outline of the first fixing member hole and overlapping the mica plate, an overlapping area, denoted as area S1, between the head and the mica plate being not less than 5.8 × 10⁻⁶ times an area S2 of the mica plate.

In the case where a mica plate has a hole and is fixed by a fixing member having a head and a body inserted into the hole, the surrounding area of the hole is likely to have high stress upon impact.

In the present invention, the ratio of the area S1 to the area S2 is within the above range. Thus, the stress can be distributed to the head of the fixing member, so that the stress can be reduced.

In the battery pack according to the first aspect of the present invention, the fixing member may have at least one shape selected from the group consisting of a rivet shape, a spring pin shape, a push pin shape, a lock pin shape, and a stepped pin shape.

The fixing member may have a rivet shape; the second fixing member hole may be a through hole; the body of the fixing member may pass through the first fixing member hole and the second fixing member hole; and the body may have a crimped portion at its tip.

The fixing member may have a screw shape; the second fixing member hole may be a screw hole; and the body of the fixing member may be screwed into the second fixing member hole.

Such a fixing member can suitably fix the mica plate.

In the battery pack according to the first aspect of the present invention, preferably, the mica plate is fixed by a plurality of the fixing members, and in a plan view of the mica plate, an overlapping area, denoted as area S1n, between the head of each fixing member and the mica plate is larger than an opening area S3 of each first fixing member hole.

When the relationship between the area S1n and the area S3 is within the above range, the stress in the surrounding area of the first fixing member hole can be reduced.

A battery pack according to a second aspect of the present invention includes: a module with a plurality of battery cells; a case containing the module; and a mica plate disposed between the module and the case and having a first main face and a second main face opposite to the first main face, the battery pack further including a fixing member to fix the mica plate, the mica plate having a first fixing member hole penetrating from the first main face to the second main face, at least one of the module or the case being provided with a connecting member having a second fixing member hole, the fixing member having a rivet shape and including a head and a body extending from the head, the head of the fixing member being on the first main face of the mica plate, the body of the fixing member passing through the first fixing member hole and the second fixing member hole, the body having a crimped portion at its tip, a shortest distance from an outline of the first fixing member hole to an end of the crimped portion being more than 0 mm and 22 mm or less in a planar perspective view of the mica plate.

When the shortest distance from the outline of the first fixing member hole to the end of the crimped portion is more than 0 mm and 22 mm or less, stress can be reduced.

Moreover, the fixing member can be prevented from falling off.

In the battery pack according to the second aspect of the present invention, in a planar perspective view of the mica plate, the shortest distance from the outline of the first fixing member hole to an end of the crimped portion is preferably longer than a shortest distance from the outline of the first fixing member hole to an end of the head.

With such a structure, the crimped portion has a larger contact area with the connecting member, so that stress can be distributed more effectively.

In the battery pack according to the second aspect of the present invention, the mica plate is preferably fixed by a plurality of the fixing members.

The use of a plurality of the fixing members enables stable fixing of the mica plate.

In the battery pack according to the first or second aspect of the present invention, preferably, the mica plate is substantially tetragonal in a plan view, the mica plate in a plan view has an outline including a first side and a second side opposite to the first side, and the mica plate has a pair of the first fixing holes, with one of the holes being at an end portion to which the first side belongs and the other being at an end potion to which the second side belongs.

When the first fixing member holes are provided at such positions, the fixing members can fix the mica plate more stably.

In the battery pack according to the first or second aspect of the present invention, preferably, an annular washer is disposed between the head and the mica plate, and the body passes through an annular opening of the washer.

The washer can distribute the pressure during fixing, preventing damage in the mica plate.

Moreover, stress can be distributed by increasing the area overlapping the mica plate. Thus, the stress can be reduced.

In the battery pack according to the first or second aspect of the present invention, preferably, the mica plate has a ridge extending in a first direction on its first main face side.

The natural frequency of the mica plate is influenced by the length, Young's modulus, density, cross-sectional area, and second moment of the cross section of the mica plate. For example, a higher second moment of the cross section leads to a higher natural frequency.

When the natural frequency of the mica plate is higher than the vibration frequency of the surrounding environment, resonance does not occur, so that stress is less likely to occur in the mica plate.

When the mica plate in the battery pack of the present invention has a prescribed ridge, the mica plate has a higher second moment of the cross section than a flat mica plate having the same weight. In other words, the mica plate has a higher second moment of the cross section per unit weight.

Even when the battery pack of the present invention is placed in an environment with vibrations, the natural frequency of the mica plate is likely to be higher than the vibration frequency of the surrounding environment.

Thus, the mica plate is resistant to damage even when its thickness is reduced.

In the battery pack according to the first or second aspect of the present invention, the mica plate preferably has a first protrusion on its first main face side.

The mica plate with such a shape has a higher second moment of the cross section than a flat mica plate having the same weight. In other words, the mica plate has a higher second moment of the cross section per unit weight.

Therefore, even when the battery pack of the present invention is placed in an environment with vibrations, the natural frequency of the mica plate is likely to be higher than the vibration frequency of the surrounding environment.

Thus, the mica plate is resistant to damage even when its thickness is reduced.

In the battery pack according to the first or second aspect of the present invention, the mica plate preferably has a thickness T of 0.1 mm or more and 3.0 mm or less.

Although the mica plate in the battery pack of the present invention is thin with a thickness of 0.1 mm or more and 3.0 mm or less, the fixing member has a prescribed shape that prevents stress from concentrating on a portion of the mica plate as described above.

Therefore, the mica plate is resistant to damage.

A mica plate having a thickness T of less than 0.1 mm is too thin and becomes weak and susceptible to damage.

A mica plate having a thickness T of more than 3.0 mm is likely to be heavy.

In the battery pack according to the first or second aspect of the present invention, the mica plate preferably has a Young's modulus of 110 GPa or less.

When the Young's modulus is 110 GPa or less, the mica plate has high flexibility, and stress therein, if occurs, is likely to be distributed and absorbed.

Therefore, the mica plate is resistant to damage.

In the battery pack according to the first or second aspect of the present invention, preferably, the module has a safety valve on its surface, the mica plate is present between the surface with the safety valve of the module and the case, and the mica plate has a safety valve hole to expose the safety valve.

Even if flame or gas is generated from the module due to thermal runaway, the safety valve can exhaust the flame or gas.

Moreover, the mica plate can prevent the flame or gas from spreading.

In the battery pack according to the first or second aspect of the present invention, preferably, the case includes a housing member and a lid member covering the housing member, the module is contained in the housing member such that the safety valve is closer to the lid member, and the mica plate is disposed between the module and the lid member.

The battery pack having such a structure is easy to produce.

The structure according to a third aspect of the present invention includes: a mica plate having a first main face and a second main face opposite to the first main face and having a first fixing member hole penetrating from the first main face to the second main face; a substrate including a connecting member having a second fixing member hole; and a fixing member fixing the mica plate, the fixing member including a head and a body extending from the head, the head of the fixing member being on the first main face of the mica plate, the body of the fixing member passing through the first fixing member hole into the second fixing member hole, thereby fixing the mica plate, the head, in a planar perspective view of the mica plate, covering at least a part of an outline of the first fixing member hole and overlapping the mica plate, an overlapping area, denoted as area S1, between the head and the mica plate being not less than 5.8 × 10⁻⁶ times an area S2 of the mica plate.

In the case where a mica plate has a hole and is fixed by a fixing member having a head and a body inserted into the hole, the surrounding area of the hole is likely to have high stress upon impact.

In the present invention, the ratio of the area S1 to the area S2 is within the above range. Thus, the stress can be distributed to the head of the fixing member, so that the stress can be reduced.

A structure according to a fourth aspect of the present invention includes: a mica plate having a first main face and a second main face opposite to the first main face and having a first fixing member hole penetrating from the first main face to the second main face; a substrate including a connecting member having a second fixing member hole; and a fixing member fixing the mica plate, the fixing member having a rivet shape and including a head and a body extending from the head, the head of the fixing member being on the first main face of the mica plate, the body of the fixing member passing through the first fixing member hole and the second fixing member hole, the body having a crimped portion at its tip, a shortest distance from an outline of the first fixing member hole to an end of the crimped portion being more than 0 mm and 22 mm or less in a planar perspective view of the mica plate.

When the shortest distance from the outline of the first fixing member hole to the end of the crimped portion is more than 0 mm and 22 mm or less, stress can be distributed.

Moreover, the fixing member can be prevented from falling off.

A method for producing a mica plate according to a fifth aspect of the present invention includes: molding a mica prepreg in a mold through hot pressing into a mica plate having a first main face and a second main face opposite to the first main face; and forming a first fixing member hole penetrating from the first main face to the second main face in the mica plate.

The method for producing a mica plate of the present invention can produce the mica plate included in the battery pack of the present invention.

### - Advantageous Effects of Invention

The present invention can provide a battery pack including a mica plate that is resistant to damage and is lightweight.

### BRIEF DESCRIPTION OF DRAWINGS

FIG. 1A illustrates a schematic perspective view of an example of the battery pack according to the first embodiment of the present invention.
FIG. 1B illustrates an A-A line cross-sectional view of FIG. 1A.
FIG. 1C illustrates an exploded view of the battery pack shown in FIG. 1A.
FIG. 2A illustrates a schematic cross-sectional view of an example of a fixing member and its periphery when a mica plate is fixed to a module via a connecting member by the screw-shaped fixing member in the battery pack according to the first embodiment of the present invention.
FIG. 2B illustrates a plan view of the fixing member and its periphery shown in FIG. 2A, seen from the first main face side of the mica plate.
FIG. 3A illustrates a schematic cross-sectional view of an example of a fixing member and its periphery when a mica plate is fixed to a module via a connecting member by the push pin-shaped fixing member in the battery pack according to the first embodiment of the present invention.
FIG. 3B illustrates a plan view of the fixing member and its periphery shown in FIG. 3A, seen from the first main face side of the mica plate.
FIG. 4A illustrates a schematic cross-sectional view of an example of a fixing member and its periphery when a mica plate is fixed to a module via a connecting member by the rivet-shaped fixing member in the battery pack according to the first embodiment of the present invention.
FIG. 4B illustrates a plan view of the rivet-shaped fixing member and its periphery shown in FIG. 4A, seen from the first main face side of the mica plate.
FIG. 5 illustrates a schematic plan view of an example of the mica plate included in the battery pack according to the first embodiment of the present invention.
FIG. 6A illustrates a schematic perspective view of an example of the mica plate which has a ridge included in the battery pack according to the first embodiment of the present invention.
FIG. 6B illustrates a schematic perspective view of another example of the mica plate which has a ridge included in the battery pack according to the first embodiment of the present invention.
FIG. 7A illustrates a schematic perspective view of an example of the mica plate which has a protrusion included in the battery pack according to the first embodiment of the present invention.
FIG. 7B illustrates a schematic perspective view of another example of the mica plate which has a protrusion included in the battery pack according to the first embodiment of the present invention.
FIG. 8A illustrates a schematic cross-sectional view of an example of the battery pack according to the second embodiment of the present invention.
FIG. 8B illustrates a schematic perspective view of an example of a mica plate included in the battery pack according to the second embodiment of the present invention.
FIG. 9 illustrates a schematic cross-sectional view of an example of the battery pack according to the third embodiment of the present invention.
FIG. 10 illustrates a mica plate model designed for impact simulation.
FIG. 11A illustrates a stress contour map of the entire mica plate in Experimental Example 1-1 in the impact simulation.
FIG. 11B illustrates an enlarged stress contour map of the maximum stress region in the mica plate in Experimental Example 1-1 in the impact simulation.
FIG. 11C illustrates a displacement contour map of the entire mica plate in Experimental Example 1-1 in the impact simulation.
FIG. 12A illustrates a stress contour map of the entire mica plate in Experimental Example 1-3 in the impact simulation.
FIG. 12B illustrates an enlarged stress contour map of the maximum stress region in the mica plate in Experimental Example 1-3 in the impact simulation.
FIG. 12C illustrates a displacement contour map of the entire mica plate in Experimental Example 1-3 in the impact simulation.
FIG. 13A illustrates a stress contour map of the entire mica plate in Experimental Example 1-4 in the impact simulation.
FIG. 13B illustrates an enlarged stress contour map of the maximum stress region in the mica plate in Experimental Example 1-4 in the impact simulation.
FIG. 13C illustrates a displacement contour map of the entire mica plate in Experimental Example 1-4 in the impact simulation.
FIG. 14A illustrates a stress contour map of the entire mica plate in Experimental Example 2-1 in the impact simulation.
FIG. 14B illustrates an enlarged stress contour map of the maximum stress region in the mica plate in Experimental Example 2-1 in the impact simulation.
FIG. 14C illustrates a displacement contour map of the entire mica plate in Experimental Example 2-1 in the impact simulation.
FIG. 15A illustrates a stress contour map of the entire mica plate in Experimental Example 2-2 in the impact simulation.
FIG. 15B illustrates an enlarged stress contour map of the maximum stress region in the mica plate in Experimental Example 2-2 in the impact simulation.
FIG. 15C illustrates a displacement contour map of the entire mica plate in Experimental Example 2-2 in the impact simulation.
FIG. 16A illustrates a stress contour map of the entire mica plate in Experimental Example 2-3 in the impact simulation.
FIG. 16B illustrates an enlarged stress contour map of the maximum stress region in the mica plate in Experimental Example 2-3 in the impact simulation.
FIG. 16C illustrates a displacement contour map of the entire mica plate in Experimental Example 2-3 in the impact simulation.
FIG. 17A illustrates a stress contour map of the entire mica plate in Experimental Example 3-1 in the impact simulation.
FIG. 17B illustrates an enlarged stress contour map of the maximum stress region in the mica plate in Experimental Example 3-1 in the impact simulation.
FIG. 17C illustrates a displacement contour map of the entire mica plate in Experimental Example 3-1 in the impact simulation.
FIG. 18A illustrates a stress contour map of the entire mica plate in Experimental Example 3-2 in the impact simulation.
FIG. 18B illustrates an enlarged stress contour map of the maximum stress region in the mica plate in Experimental Example 3-2 in the impact simulation.
FIG. 18C illustrates a displacement contour map of the entire mica plate in Experimental Example 3-2 in the impact simulation.
FIG. 19A illustrates a stress contour map of the entire mica plate in Experimental Example 3-3 in the impact simulation.
FIG. 19B illustrates an enlarged stress contour map of the maximum stress region in the mica plate in Experimental Example 3-3 in the impact simulation.
FIG. 19C illustrates a displacement contour map of the entire mica plate in Experimental Example 3-3 in the impact simulation.
FIG. 20A illustrates a stress contour map of the entire mica plate in Experimental Example 4-1 in the impact simulation.
FIG. 20B illustrates an enlarged stress contour map of the maximum stress region in the mica plate in Experimental Example 4-1 in the impact simulation.
FIG. 20C illustrates a displacement contour map of the entire mica plate in Experimental Example 4-1 in the impact simulation.
FIG. 21A illustrates a stress contour map of the entire mica plate in Experimental Example 4-2 in the impact simulation.
FIG. 21B illustrates an enlarged stress contour map of the maximum stress region in the mica plate in Experimental Example 4-2 in the impact simulation.
FIG. 21C illustrates a displacement contour map of the entire mica plate in Experimental Example 4-2 in the impact simulation.
FIG. 22A illustrates a stress contour map of the entire mica plate in Experimental Example 4-3 in the impact simulation.
FIG. 22B illustrates an enlarged stress contour map of the maximum stress region in the mica plate in Experimental Example 4-3 in the impact simulation.
FIG. 22C illustrates a displacement contour map of the entire mica plate in Experimental Example 4-3 in the impact simulation.
FIG. 23A illustrates a stress contour map of the entire mica plate in Experimental Example 5-1 in the impact simulation.
FIG. 23B illustrates an enlarged stress contour map of the maximum stress region in the mica plate in Experimental Example 5-1 in the impact simulation.
FIG. 23C illustrates a displacement contour map of the entire mica plate in Experimental Example 5-1 in the impact simulation.
FIG. 24A illustrates a stress contour map of the entire mica plate in Experimental Example 5-2 in the impact simulation.
FIG. 24B illustrates an enlarged stress contour map of the maximum stress region in the mica plate in Experimental Example 5-2 in the impact simulation.
FIG. 24C illustrates a displacement contour map of the entire mica plate in Experimental Example 5-2 in the impact simulation.
FIG. 25A illustrates a stress contour map of the entire mica plate in Experimental Example 5-3 in the impact simulation.
FIG. 25B illustrates an enlarged stress contour map of the maximum stress region in the mica plate in Experimental Example 5-3 in the impact simulation.
FIG. 25C illustrates a displacement contour map of the entire mica plate in Experimental Example 5-3 in the impact simulation.
FIG. 26A illustrates a stress contour map of the entire mica plate in Experimental Example 6-1 in the impact simulation.
FIG. 26B illustrates an enlarged stress contour map of the maximum stress region in the mica plate in Experimental Example 6-1 in the impact simulation.
FIG. 26C illustrates a displacement contour map of the entire mica plate in Experimental Example 6-1 in the impact simulation.
FIG. 27A illustrates a stress contour map of the entire mica plate in Experimental Example 6-2 in the impact simulation.
FIG. 27B illustrates an enlarged stress contour map of the maximum stress region in the mica plate in Experimental Example 6-2 in the impact simulation.
FIG. 27C illustrates a displacement contour map of the entire mica plate in Experimental Example 6-2 in the impact simulation.
FIG. 28A illustrates a stress contour map of the entire mica plate in Experimental Example 6-3 in the impact simulation.
FIG. 28B illustrates an enlarged stress contour map of the maximum stress region in the mica plate in Experimental Example 6-3 in the impact simulation.
FIG. 28C illustrates a displacement contour map of the entire mica plate in Experimental Example 6-3 in the impact simulation.
FIG. 29A illustrates a stress contour map of the entire mica plate in Experimental Example 7-1 in the impact simulation.
FIG. 29B illustrates an enlarged stress contour map of the maximum stress region in the mica plate in Experimental Example 7-1 in the impact simulation.
FIG. 29C illustrates a displacement contour map of the entire mica plate in Experimental Example 7-1 in the impact simulation.
FIG. 30A illustrates a stress contour map of the entire mica plate in Experimental Example 7-2 in the impact simulation.
FIG. 30B illustrates an enlarged stress contour map of the maximum stress region in the mica plate in Experimental Example 7-2 in the impact simulation.
FIG. 30C illustrates a displacement contour map of the entire mica plate in Experimental Example 7-2 in the impact simulation.
FIG. 31A illustrates a stress contour map of the entire mica plate in Experimental Example 7-3 in the impact simulation.
FIG. 31B illustrates an enlarged stress contour map of the maximum stress region in the mica plate in Experimental Example 7-3 in the impact simulation.
FIG. 31C illustrates a displacement contour map of the entire mica plate in Experimental Example 7-3 in the impact simulation.
FIG. 32A illustrates a stress contour map of the entire mica plate in Experimental Example 8-1 in the impact simulation.
FIG. 32B illustrates an enlarged stress contour map of the maximum stress region in the mica plate in Experimental Example 8-1 in the impact simulation.
FIG. 32C illustrates a displacement contour map of the entire mica plate in Experimental Example 8-1 in the impact simulation.
FIG. 33A illustrates a stress contour map of the entire mica plate in Experimental Example 8-2 in the impact simulation.
FIG. 33B illustrates an enlarged stress contour map of the maximum stress region in the mica plate in Experimental Example 8-2 in the impact simulation.
FIG. 33C illustrates a displacement contour map of the entire mica plate in Experimental Example 8-2 in the impact simulation.
FIG. 34A illustrates a stress contour map of the entire mica plate in Experimental Example 8-3 in the impact simulation.
FIG. 34B illustrates an enlarged stress contour map of the maximum stress region in the mica plate in Experimental Example 8-3 in the impact simulation.
FIG. 34C illustrates a displacement contour map of the entire mica plate in Experimental Example 8-3 in the impact simulation.
FIG. 35A illustrates a stress contour map of the entire mica plate in Experimental Example 9-1 in the impact simulation.
FIG. 35B illustrates an enlarged stress contour map of the maximum stress region in the mica plate in Experimental Example 9-1 in the impact simulation.
FIG. 35C illustrates a displacement contour map of the entire mica plate in Experimental Example 9-1 in the impact simulation.
FIG. 36A illustrates a stress contour map of the entire mica plate in Experimental Example 9-2 in the impact simulation.
FIG. 36B illustrates an enlarged stress contour map of the maximum stress region in the mica plate in Experimental Example 9-2 in the impact simulation.
FIG. 36C illustrates a displacement contour map of the entire mica plate in Experimental Example 9-2 in the impact simulation.
FIG. 37A illustrates a stress contour map of the entire mica plate in Experimental Example 9-3 in the impact simulation.
FIG. 37B illustrates an enlarged stress contour map of the maximum stress region in the mica plate in Experimental Example 9-3 in the impact simulation.
FIG. 37C illustrates a displacement contour map of the entire mica plate in Experimental Example 9-3 in the impact simulation.

### DESCRIPTION OF EMBODIMENTS

### (First Embodiment)

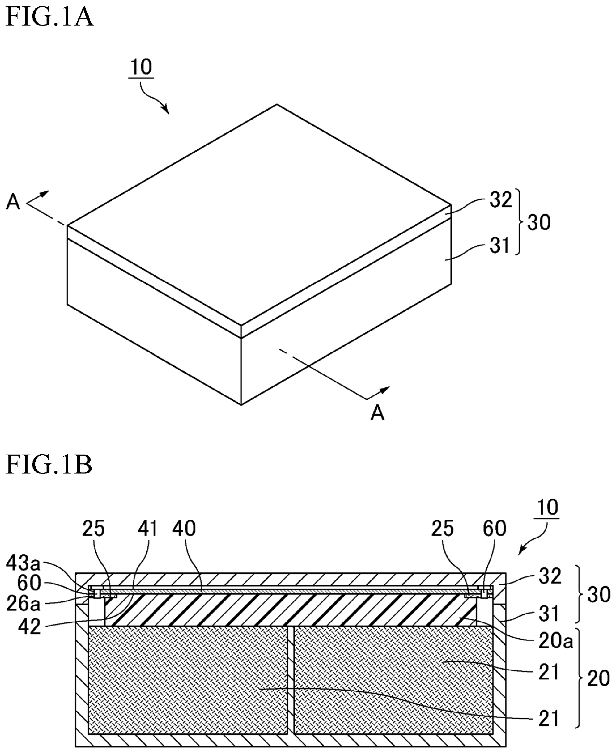

FIG. 1A illustrates a schematic perspective view of an example of the battery pack according to the first embodiment of the present invention.

FIG. 1B illustrates an A-A line cross-sectional view of FIG. 1A.

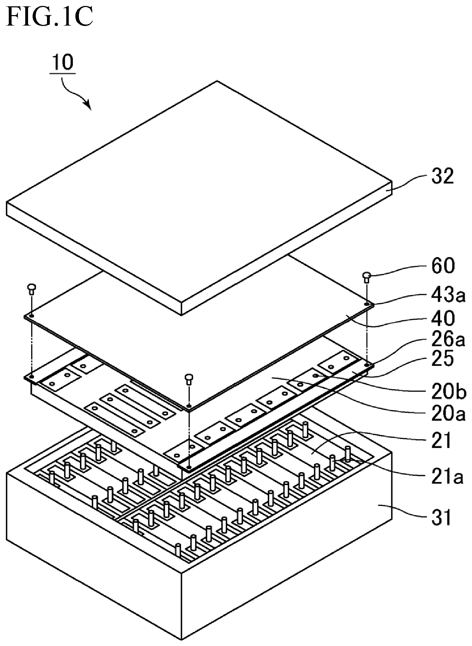

FIG. 1C illustrates an exploded view of the battery pack shown in FIG. 1A.

A battery pack 10 shown in FIG. 1A, FIG. 1B, and FIG. 1C includes a module 20 with a plurality of battery cells 21 and a case 30 containing the module 20.

The case 30 includes a housing member 31 and a lid member 32 covering the housing member 31. The housing member 31 contains the module 20.

The battery pack 10 includes a mica plate 40 disposed between the module 20 and the lid member 32.

The mica plate 40 has a first main face 41 and a second main face 42 opposite to the first main face 41.

The mica plate 40 is disposed such that the first main face 41 faces the case 30 and the second main face 42 faces the module 20.

Each battery cell 21 stores electric power and is preferably a rechargeable battery known as secondary battery. Examples of the secondary battery include lithium-ion batteries, nickel-metal hydride batteries, and sodium ion batteries.

Each battery cell 21 shown in FIG. 1A, FIG. 1B, and FIG. 1C has a rectangular parallelepiped shape. In the battery pack of the present invention, each battery cell may have a three-dimensional shape other than the rectangular parallelepiped shape (e.g., a cubic shape or a modified shape).

In the module 20, a plurality of the battery cells 21 are arranged in a row and fixed by a connecting module member 20a.

Each battery cell 21 has a terminal 21a. The adjacent battery cells 21 are electrically connected to each other by busbars 20b which are disposed on the connecting module member 20a and connect the terminals 21a.

Each busbar 20b is a conductive metal member having a flat plate shape. Examples of the material of the busbars 20b include copper, copper alloys, stainless steel (SUS), and aluminum.

The busbars 20b may be fixed to the terminals 21a with any fixing means (for example, screw fastening, welding).

In the module 20, the connecting module member 20a is provided with connecting members 25 each having a second fixing member hole 26a.

As shown in FIG. 1C, the mica plate 40 has first fixing member holes 43a at its four corners.

The first fixing member holes 43a are designed to be connected to the respective second fixing member holes 26a when the mica plate 40 is placed on the connecting module member 20a.

The mica plate 40 is fixed to the connecting module member 20a by fixing members 60.

Examples of the material of the case 30 include steel and aluminum. The steel is preferably stainless steel (SUS).

Next, modes of fixing by the fixing members 60 will be described below.

Each fixing member 60 in the battery pack 10 has a shape with a head and a body extending from the head, such as a screw shape, a push pin shape, or a rivet shape.

The following will describe a case where the mica plate is fixed to the module via a connecting member by a screw-shaped fixing member.

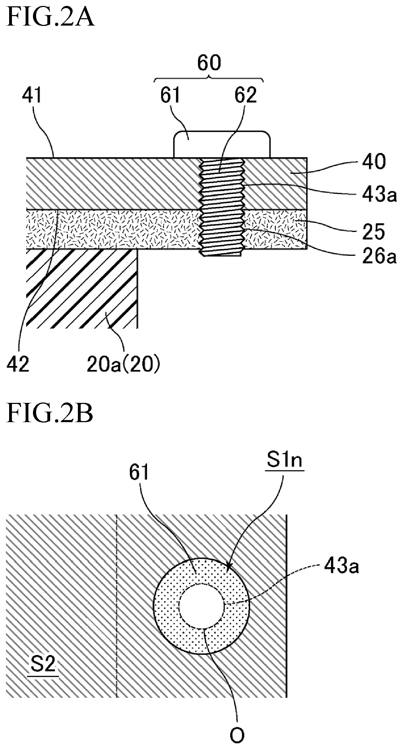

FIG. 2A illustrates a schematic cross-sectional view of an example of a fixing member and its periphery when a mica plate is fixed to a module via a connecting member by the screw-shaped fixing member in the battery pack according to the first embodiment of the present invention.

FIG. 2B illustrates a plan view of the fixing member and its periphery shown in FIG. 2A, seen from the first main face side of the mica plate.

As shown in FIG. 2A, each screw-shaped fixing member 60 includes a head 61 and a body 62 extending from the head 61.

Also as shown in FIG. 2A, the mica plate 40 has a first fixing member hole 43a penetrating from a first main face 41 to a second main face 42.

A module 20 is provided with a connecting member 25 having a second fixing member hole 26a. The second fixing member hole 26a is a screw hole.

The head 61 is on the first main face 41. The body 62 passes through the first fixing member hole 43a and is screwed into the second fixing member hole 26a, and the screw-shaped fixing member 60 fixes the mica plate 40 to the module 20.

Though not shown, the mica plate 40 may be fixed by a single screw-shaped fixing member 60 or by a plurality of screw-shaped fixing members 60.

The connecting member 25 may be fixed to the module 20 with, for example, a screw or an adhesive or may be welded to the module 20.

As shown in FIG. 2B, the head 61 covers an outline O of the first fixing member hole 43a and overlaps the mica plate 40.

Focusing on a single screw-shaped fixing member 60, an overlapping area between the head 61 and the mica plate 40 is defined as area S1n, while a sum of the areas S1n for the screw-shaped fixing members 60 is defined as area S1. Then, the area S1 is not less than 5.8 × 10⁻⁶ times an area S2 of the mica plate 40.

In the case where the mica plate 40 has the first fixing member hole 43a; the connecting member 25 has the second fixing member hole 26a; and the mica plate 40 is fixed by the screw-shaped fixing member 60 having the head 61 and the body 62, the surrounding area of the first fixing member hole 43a is likely to have high stress upon impact.

When the ratio of the area S1 to the area S2 is within the above range, the stress can be distributed to the head 61 of the screw-shaped fixing member 60, so that the stress can be reduced.

Thus, the mica plate 40 is resistant to damage.

The damage resistance of the mica plate 40 is also influenced by the thickness of the mica plate 40.

For example, when the mica plate 40 has a thickness of 1.0 mm or more, the area S1 is preferably not less than 1.4 × 10⁻³ times the area S2.

When the mica plate 40 has a thickness of 0.5 mm or more and less than 1.0 mm, the area S1 is preferably not less than 2.5 × 10⁻³ times the area S2, more preferably not less than 1.3 × 10⁻² times the area S2.

When the mica plate 40 has a thickness of 0.3 mm or more and less than 0.5 mm, the area S1 is preferably not less than 6.0 × 10⁻³ times the area S2, more preferably not less than 1.9 × 10⁻² times the area S2.

When the mica plate 40 has a thickness of 0.1 mm or more and less than 0.3 mm, the area S1 is preferably not less than 8.1 × 10⁻³ times the area S2, more preferably not less than 2.4 × 10⁻² times the area S2.

The area S1n is preferably larger than the opening area S3 of a single first fixing member hole 43a, more preferably larger than the opening area S3 and less than 2.2 times the opening area S3.

When the relationship between the area S1n and the area S3 is within the above range, the stress in the surrounding area of the first fixing member hole 43a can be reduced.

The material of each screw-shaped fixing member 60 is not limited and may be, for example, aluminum, stainless steel, copper, iron, brass, titanium, or resin.

The diameter of the head 61 of each screw-shaped fixing member 60 is preferably 1.6 mm or more, more preferably 3.2 mm or more.

The diameter of the body 62 of each screw-shaped fixing member 60 may be 1.1 mm or more and less than 1.6 mm, or may be 2.2 mm or more and less than 3.2 mm.

The diameter of each first fixing member hole 43a may be more than 1.1 mm and 1.5 mm or less, or may be more than 2.2 mm and 3.0 mm or less.

The material of the connecting member 25 is not limited and may be aluminum, stainless steel, copper, or a resin cured product.

The diameter of each second fixing member hole 26a may be more than 1.1 mm and 1.5 mm or less, or may be more than 2.2 mm and 3.0 mm or less.

In the battery pack of the present invention, preferably, an annular washer is disposed between the head 61 and the mica plate 40, and the body 62 passes through the annular opening of the washer.

The washer can distribute the pressure during fixing, preventing damage in the mica plate 40.

Moreover, stress can be distributed by increasing the area overlapping the mica plate. Thus, the stress can be reduced.

The following will describe a case where the mica plate is fixed to the module via a connecting member by a push pin-shaped fixing member.

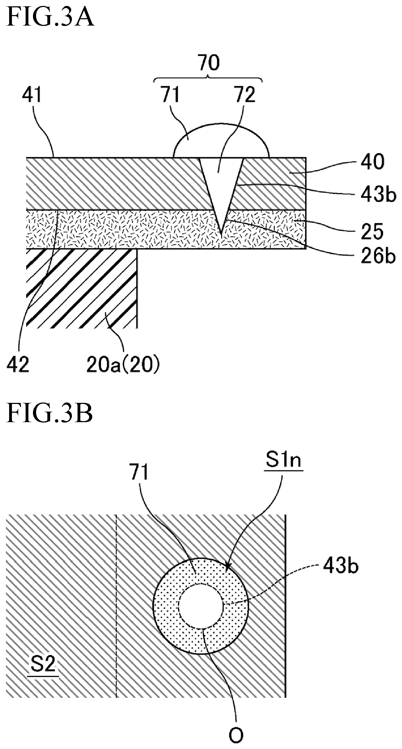

FIG. 3A illustrates a schematic cross-sectional view of an example of a fixing member and its periphery when a mica plate is fixed to a module via a connecting member by the push pin-shaped fixing member in the battery pack according to the first embodiment of the present invention.

FIG. 3B illustrates a plan view of the fixing member and its periphery shown in FIG. 3A, seen from the first main face side of the mica plate.

As shown in FIG. 3A, a push pin-shaped fixing member 70 includes a head 71 and a body 72 extending from the head 71.

Also as shown in FIG. 3A, the mica plate 40 has a first fixing member hole 43b penetrating from a first main face 41 to a second main face 42.

A module 20 is provided with a connecting member 25 having a second fixing member hole 26b.

The head 71 is on the first main face 41. The body 72 passes through the first fixing member hole 43b and is inserted into the connecting member 25, thereby forming the second fixing member hole 26b.

Thus, the push pin-shaped fixing member 70 fixes the mica plate 40 to the module 20.

Though not shown, the mica plate 40 may be fixed by a single push pin-shaped fixing member 70 or by a plurality of push pin-shaped fixing members 70.

The connecting member 25 may be fixed to the module 20 with, for example, a screw or an adhesive or may be welded to the module 20.

As shown in FIG. 3B, the head 71 covers an outline O of the first fixing member hole 43b and overlaps the mica plate 40.

Focusing on a single push pin-shaped fixing member 70, an overlapping area between the head 71 and the mica plate 40 is defined as area S1n, while a sum of the areas S1n for the push pin-shaped fixing members 70 is defined as area S1. Then, the area S1 is not less than 5.8 × 10⁻⁶ times an area S2 of the mica plate 40.

In the case where the mica plate 40 has the first fixing member hole 43b; the connecting member 25 has the second fixing member hole 26b; and the mica plate 40 is fixed by the push pin-shaped fixing member 70 having the head 71 and the body 72, the surrounding area of the first fixing member hole 43b is likely to have high stress upon impact.

When the ratio of the area S1 to the area S2 is within the above range, the stress can be distributed to the head 71 of the push pin-shaped fixing member 70, so that the stress can be reduced.

Thus, the mica plate 40 is resistant to damage.

The damage resistance of the mica plate 40 is also influenced by the thickness of the mica plate 40.

For example, when the mica plate 40 has a thickness of 1.0 mm or more, the area S1 is preferably not less than 1.4 × 10⁻³ times the area S2.

When the mica plate 40 has a thickness of 0.5 mm or more and less than 1.0 mm, the area S1 is preferably not less than 2.5 × 10⁻³ times the area S2, more preferably not less than 1.3 × 10⁻² times the area S2.

When the mica plate 40 has a thickness of 0.3 mm or more and less than 0.5 mm, the area S1 is preferably not less than 6.0 × 10⁻³ times the area S2, more preferably not less than 1.9 × 10⁻² times the area S2.

When the mica plate 40 has a thickness of 0.1 mm or more and less than 0.3 mm, the area S1 is preferably not less than 8.1 × 10⁻³ times the area S2, more preferably not less than 2.4 × 10⁻² times the area S2.

The area S1n is preferably larger than the opening area S3 of a single first fixing member hole 43b, more preferably larger than the opening area S3 and less than 2.2 times the opening area S3.

When the relationship between the area S1n and the area S3 is within the above range, the stress in the surrounding area of the first fixing member hole 43b can be reduced.

The material of each push pin-shaped fixing member 70 is not limited and may be, for example, aluminum, stainless steel, copper, iron, brass, titanium, or resin.

The diameter of the head 71 of each push pin-shaped fixing member 70 is preferably 1.6 mm or more, more preferably 3.2 mm or more.

The diameter of the body 72 of each push pin-shaped fixing member 70 may be 1.1 mm or more and less than 1.6 mm, or may be 2.2 mm or more and less than 3.2 mm.

The diameter of each first fixing member hole 43b may be more than 1.1 mm and 1.5 mm or less, or may be more than 2.2 mm and 3.0 mm or less.

The material of the connecting member 25 is not limited and may be aluminum, stainless steel, copper, or a resin cured product.

The diameter of each second fixing member hole 26b is preferably 1.5 mm or more, more preferably 3.0 mm or more.

In the battery pack of the present invention, preferably, an annular washer is disposed between the head 71 and the mica plate 40, and the body 72 passes through the annular opening of the washer.

The washer can distribute the pressure during fixing, preventing damage in the mica plate 40.

Moreover, stress can be distributed by increasing the area overlapping the mica plate. Thus, the stress can be reduced.

The following will describe a case where the mica plate is fixed to the module via a connecting member by a rivet-shaped fixing member.

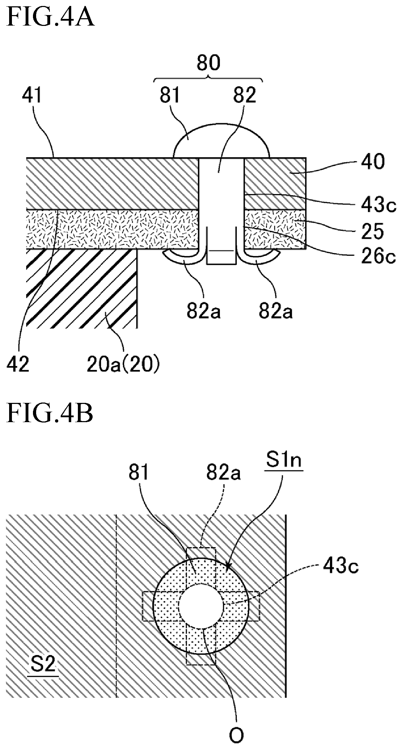

FIG. 4A illustrates a schematic cross-sectional view of an example of a fixing member and its periphery when a mica plate is fixed to a module via a connecting member by the rivet-shaped fixing member in the battery pack according to the first embodiment of the present invention.

FIG. 4B illustrates a plan view of the rivet-shaped fixing member and its periphery shown in FIG. 4A, seen from the first main face side of the mica plate.

As shown in FIG. 4A and FIG. 4B, a rivet-shaped fixing member 80 includes a head 81 and a body 82 extending from the head 81. The body 82 has a tip with a split portion 82a divided into four parts.

The mica plate 40 also has a first fixing member hole 43c penetrating from a first main face 41 to a second main face 42.

A module 20 is provided with a connecting member 25 having a second fixing member hole 26c.

The head 81 is on the first main face 41. The body 82 passes through the first fixing member hole 43c and the second fixing member hole 26c. The rivet-shaped fixing member 80 fixes the mica plate 40 through the bending (crimping) of the split portion 82a of the body 82.

Though not shown, the mica plate 40 may be fixed by a single rivet-shaped fixing member 80 or by a plurality of rivet-shaped fixing members 80.

As shown in FIG. 4B, the head 81 covers an outline O of the first fixing member hole 43c and overlaps the mica plate 40.

Focusing on a single rivet-shaped fixing member 80, an overlapping area between the head 81 and the mica plate 40 is defined as area S1n, while a sum of the areas S1n for the rivet-shaped fixing members 80 is defined as area S1. Then, the area S1 is not less than 5.8 × 10⁻⁶ times an area S2 of the mica plate 40.

In the case where the mica plate 40 has the first fixing member hole 43c; the module 20 is provided with the connecting member 25 having the second fixing member hole 26c; and the mica plate 40 is fixed by the rivet-shaped fixing member 80 having the head 81 and the body 82, the surrounding area of the first fixing member hole 43c is likely to have high stress upon impact.

When the ratio of the area S1 to the area S2 is within the above range, the stress can be distributed to the head 81 of the rivet-shaped fixing member 80, so that the stress can be reduced.

Thus, the mica plate 40 is resistant to damage.

The damage resistance of the mica plate 40 is also influenced by the thickness of the mica plate 40.

For example, when the mica plate 40 has a thickness of 1.0 mm or more, the area S1 is preferably not less than 1.4 × 10⁻³ times the area S2.

When the mica plate 40 has a thickness of 0.5 mm or more and less than 1.0 mm, the area S1 is preferably not less than 2.5 × 10⁻³ times the area S2, more preferably not less than 1.3 × 10⁻² times the area S2.

When the mica plate 40 has a thickness of 0.3 mm or more and less than 0.5 mm, the area S1 is preferably not less than 6.0 × 10⁻³ times the area S2, more preferably not less than 1.9 × 10⁻² times the area S2.

When the mica plate 40 has a thickness of 0.1 mm or more and less than 0.3 mm, the area S1 is preferably not less than 8.1 × 10⁻³ times the area S2, more preferably not less than 2.4 × 10⁻² times the area S2.

The connecting member 25 may be fixed to the module 20 with, for example, a screw or an adhesive or may be welded to the module 20.

The material of each rivet-shaped fixing member 80 is not limited and may be, for example, aluminum, stainless steel, copper, iron, brass, titanium, or resin.

The diameter of the head 81 of each rivet-shaped fixing member 80 is preferably 1.6 mm or more, more preferably 3.2 mm or more.

The diameter of the body 82 of each rivet-shaped fixing member 80 may be 1.1 mm or more and less than 1.6 mm, or may be 2.2 mm or more and less than 3.2 mm.

The length of the split portion 82a is preferably more than 3 mm and 25 mm or less, more preferably more than 6 mm and 17 mm or less.

The rivet-shaped fixing member 80 has the split portion 82a divided into four parts. Yet, in the battery pack of the present invention, the tip of the body of the rivet-shaped fixing member may have any structure that can be crimpled so as to fix the mica plate.

The shortest distance from the outline of the first fixing member hole to the end of the crimped portion is preferably more than 0 mm and 22 mm or less, more preferably more than 3 mm and 10 mm or less.

When the shortest distance from the outline of the first fixing member hole to the end of the crimped portion is more than 0 mm and 22 mm or less, stress can be distributed.

Moreover, the fixing member can be prevented from falling off.

The diameter of each first fixing member hole 43c may be more than 1.1 mm and 1.5 mm or less, or may be more than 2.2 mm and 3.0 mm or less.

The material of the connecting member 25 is not limited and may be aluminum, stainless steel, copper, or a resin cured product.

The diameter of each second fixing member hole 26c may be more than 1.1 mm and 1.5 mm or less, or may be more than 2.2 mm and 3.0 mm or less.

In the battery pack of the present invention, preferably, an annular washer is disposed between the head 81 and the mica plate 40, and the body 82 passes through the annular opening of the washer.

The washer can distribute the pressure during fixing, preventing damage in the mica plate 40.

Moreover, stress can be distributed by increasing the area overlapping the mica plate. Thus, the stress can be reduced.

Next, the mica plate 40 will be described below.

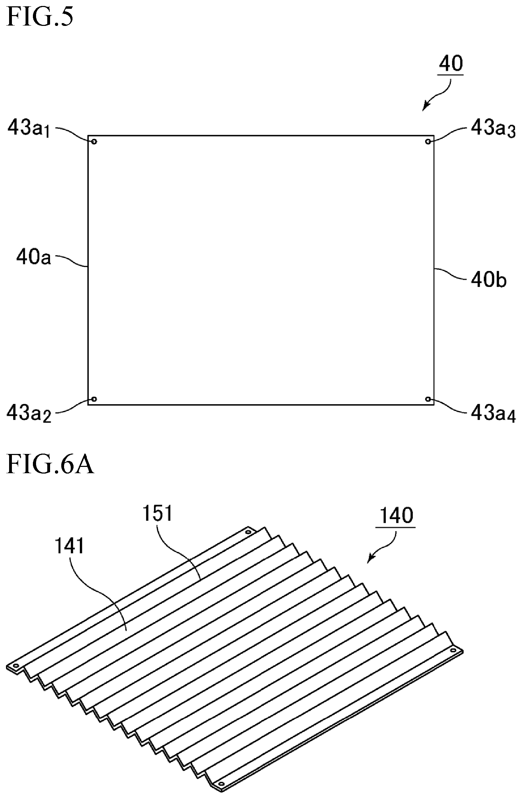

FIG. 5 illustrates a schematic plan view of an example of the mica plate included in the battery pack according to the first embodiment of the present invention.

The mica plate 40 shown in FIG. 5 is tetragonal in a plan view. The mica plate 40 in a plan view has an outline including a first side 40a and a second side 40b opposite to the first side 40a.

The mica plate 40 has a first fixing member hole 43a₁ and a first fixing member hole 43a₂ at the end portion to which the first side 40a belongs.

The mica plate 40 has a first fixing member hole 43a₃ and a first fixing member hole 43a₄ at the end portion to which the second side 40b belongs.

The first fixing member hole 43a₁ and the first fixing member hole 43a₃ are paired with each other, and a straight line connecting them is parallel to the long-side direction of the mica plate 40.

The first fixing member hole 43a₂ and the first fixing member hole 43a₄ are paired with each other, and a straight line connecting them is parallel the long-side direction of the mica plate 40.

Preferably, the shape of the mica plate 40 is appropriately determined according to the shape of the battery pack.

For example, the shape of the mica plate 40 in a plan view may be any of various shapes such as a triangle, a tetragon, a circle, and a shape of a cut-out portion of any of these shapes.

The lower limit of the thickness T of the mica plate 40 is preferably 0.1 mm or more, preferably 0.3 mm or more, more preferably 0.5 mm or more.

The upper limit of the thickness T of the mica plate 40 is preferably 3.0 mm or less, preferably 2.0 mm or less, more preferably 1.0 mm or less.

When the thickness T of the mica plate 40 is within the above range, the mica plate 40 has a reduced weight and is easy to handle.

If the mica plate 40 has a thickness T of less than 0.1 mm, it is too thin and becomes weak and susceptible to damage.

If the mica plate 40 has a thickness T of more than 3.0 mm, the mica plate 40 is heavy and difficult to use.

The Young's modulus of the mica plate 40 is preferably 110 GPa or less, more preferably 20 to 80 GPa.

When the Young's modulus is 110 GPa or less, the mica plate 40 has high flexibility, and stress therein, if occurs, is likely to be distributed and absorbed.

Therefore, the mica plate 40 is resistant to damage.

The mica plate 40 has a density of preferably 1.3 to 2.7 g/cm³, more preferably 1.7 to 2.3 g/cm³.

The mica plate 40 may have a ridge or a protrusion.

This mode will be described below using drawings.

FIG. 6A illustrates a schematic perspective view of an example of the mica plate which has a ridge included in the battery pack according to the first embodiment of the present invention.

A mica plate 140 shown in FIG. 6A has a plurality of ridges 151 on its first main face 141 side.

Each ridge 151 has a mountain-fold shape.

The ridges 151 of the mica plate 140 allow the mica plate 140 to have a high second moment of the cross section.

Since each ridge 151 has a mountain-fold shape, the weight can be reduced as compared to closely spaced ridges.

Moreover, the mica plate 140 having a high second moment of the cross section is resistant to damage even when the battery pack including the mica plate 140 is placed in an environment with vibrations.

The principle thereof will be described below.

If the natural frequency of the mica plate is equal to the frequency of the surroundings, resonance occurs, which is likely to cause damage in the mica plate. Conversely, when the natural frequency of the mica plate is higher than the vibration frequency of the surrounding environment, resonance does not occur, so that stress is less likely to occur in the mica plate.

The natural frequency of the mica plate is influenced by the length, Young's modulus, density, cross-sectional area, and second moment of the cross section of the mica plate.

For example, the natural frequency ω of an object with its both ends being fixed is calculated by the following formula (1):
[Math 1] $ω = {\left(\frac{π}{l}\right)}^{2} \sqrt{\frac{EI}{ρA}}$ wherein l represents a length, E represents a Young's modulus, I represents a second moment of the cross section, ρ represents a density, and A represents a cross-sectional area.

For example, a higher second moment of the cross section leads to a higher natural frequency.

The mica plate 140 having a plurality of the ridges 151 has a higher second moment of the cross section than a flat mica plate having the same weight. In other words, the mica plate 140 has a higher second moment of the cross section per unit weight.

Therefore, even when the battery pack is placed in an environment with vibrations, the natural frequency of the mica plate 140 is likely to be higher than the vibration frequency of the surrounding environment. Thus, the mica plate 140 is resistant to damage.

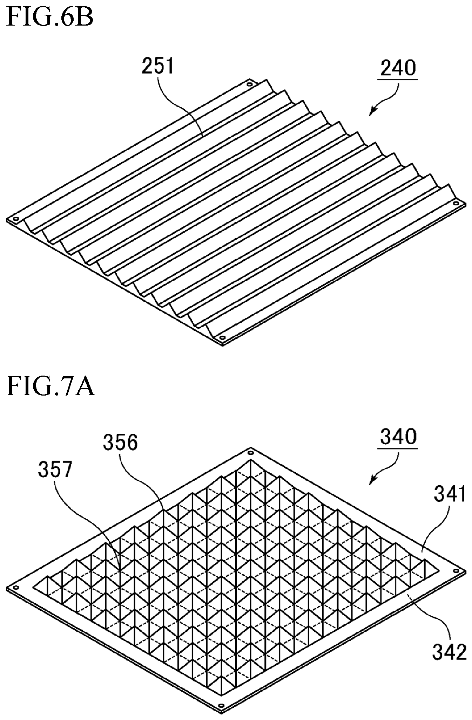

FIG. 6B illustrates a schematic perspective view of another example of the mica plate which has a ridge included in the battery pack according to the first embodiment of the present invention.

A mica plate 240 shown in FIG. 6B has the same shape as the mica plate 140, except that ridges 251 are closely spaced.

The mica plate 240 even having such a shape has a high second moment of the cross section. Therefore, the mica plate 240 is resistant to damage.

The mica plates (140, 240) shown in FIG. 6A and FIG. 6B each have a plurality of ridges on its first main face side. Yet, in the battery pack according to the first embodiment of the present invention, the mica plate may have a single ridge on its first main face side.

Moreover, in the battery pack according to the first embodiment of the present invention, the mica plate may have one or more ridges on its second main face side.

In the mica plates shown in FIG. 6A and FIG. 6B, ridges are present along the long-side direction of the mica plate. Yet, in the battery pack according to the first embodiment of the present invention, the ridges may be present in any direction. For example, the ridges may be present along the short-side direction of the mica plate.

Even such a mode of the mica plate has a high second moment of the cross section. Therefore, the mica plate is resistant to damage.

FIG. 7A illustrates a schematic perspective view of an example of the mica plate which has a protrusion included in the battery pack according to the first embodiment of the present invention.

A mica plate 340 shown in FIG. 7A has a plurality of first protrusions 356 on its first main face 341 and a plurality of second protrusions 357 on its second main face 342.

Each first protrusion 356 has a quadrangular pyramidal shape and results from the recessing of the mica plate 340 from the second main face 342 side toward the first main face 341 side.

Each second protrusion 357 has a quadrangular pyramidal shape and results from the recessing of the mica plate 340 from the first main face 341 side toward the second main face 342 side.

In a plan view of the mica plate 340, the first protrusions 356 and the second protrusions 357 are alternately arranged linearly in longitudinal and transverse directions.

In other words, the first projections 356 and the second projections 357 are arranged in a checkered pattern.

The mica plate 340 having a plurality of the first protrusions 356 and the second protrusions 357 has a higher second moment of the cross section than a flat mica plate having the same weight. In other words, the mica plate 340 has a higher second moment of the cross section per unit weight.

Therefore, even when the battery pack is placed in an environment with vibrations, the natural frequency of the mica plate 340 is likely to be higher than the vibration frequency of the surrounding environment. Thus, the mica plate 340 is resistant to damage.

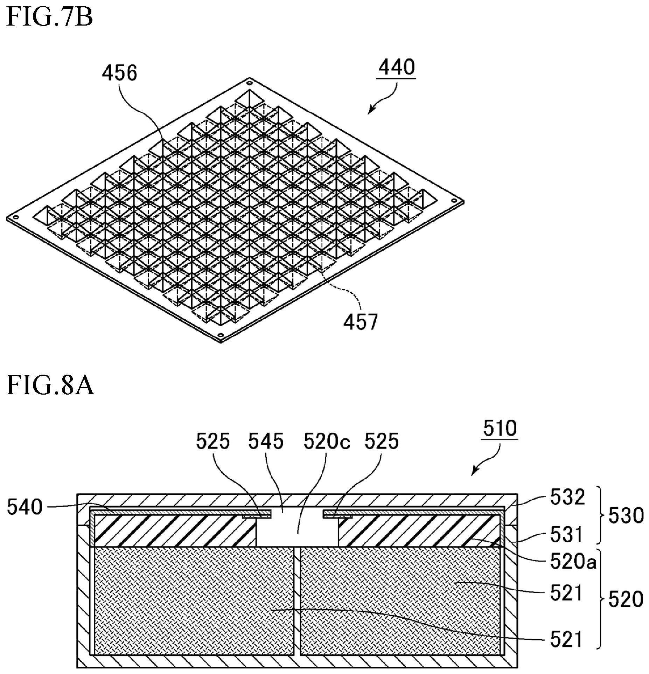

FIG. 7B illustrates a schematic perspective view of another example of the mica plate which has a protrusion included in the battery pack according to the first embodiment of the present invention.

A mica plate 440 shown in FIG. 7B has the same shape as the mica plate 340, except that first protrusions 456 and second protrusions 457 are closely spaced.

The mica plate 440 even having such a shape has a high second moment of the cross section. Therefore, the mica plate 440 is resistant to damage.

The mica plates (340, 440) shown in FIG. 7A and FIG. 7B each have a plurality of first protrusions and a plurality of second protrusions. Yet, in the battery pack according to the first embodiment of the present invention, the mica plate may have only a plurality of first protrusions or may have only a single first protrusion.

In the mica plates shown in FIG. 7A and FIG. 7B, the first protrusions and the second protrusions each have a quadrangular pyramidal shape. Yet, in the battery pack according to the first embodiment of the present invention, the first protrusions and the second protrusions each may have any convex shape, for example, a conical shape or a triangular pyramidal shape. Moreover, the first protrusions and the second protrusions each may have a columnar shape such as a cylindrical shape, a triangular prismatic shape, or a quadrangular prismatic shape.

Even such a mode of the mica plate has a high second moment of the cross section. Therefore, the mica plate is resistant to damage.

Next, a method for producing the mica plate included in the battery pack of the present invention will be described below.

The method for producing the mica plate includes: molding a mica prepreg in a mold through hot pressing into a mica plate having a first main face and a second main face opposite to the first main face; and forming a first fixing member hole penetrating from the first main face to the second main face in the mica plate.

The mold used in the molding may be any mold that can form a mica plate having a first main face and a second main face opposite to the first main face.

In order to form a first protrusion on its first main face side of the mica plate, examples of usable molds include a mold having an upper part with a recess and a lower part with a protrusion, with the recess and the protrusion being designed to fit together.

When a mica prepreg is placed between the upper part and the lower part of such a mold and is then subjected to hot-pressing, a first projection is formed at a position between the recess and the projection.

The hot-pressing may be performed under any condition and may be performed, for example, for 5 to 60 minutes at 15 MPa or less at 100°C to 300°C.

In the formation of a first fixing member hole, for example, when using a fixing member having a screw shape, a screw hole as the first fixing member hole may be formed by threading with a tap.

When using a fixing member having a push pin shape, the first fixing member hole may be formed by inserting the push pin-shaped fixing member into the mica plate until it penetrates.

The first fixing member hole may also be formed by forming a hole through which the body of the fixing member will just pass using a drill or a similar tool.

Alternatively, the first fixing member hole may be formed during the molding using a mold that can form a hole through which the body of the fixing member will just pass. In this case, the molding and the formation of a first fixing member hole are simultaneously performed.

### (Second embodiment)

Next, the battery pack according to the second embodiment of the present invention will be described below.

The battery pack according to the second embodiment of the present invention differs from the battery pack according to the first embodiment in that the module has a safety valve on its surface, and the mica plate has a safety valve hole to expose the safety valve.

Such a battery pack will be described below using drawings.

FIG. 8A illustrates a schematic cross-sectional view of an example of the battery pack according to the second embodiment of the present invention.

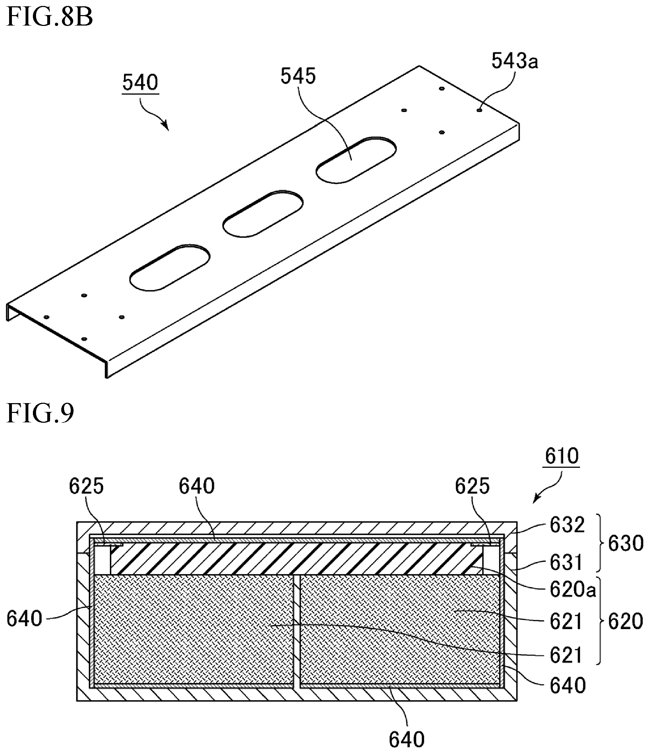

FIG. 8B illustrates a schematic perspective view of an example of a mica plate included in the battery pack according to the second embodiment of the present invention.

A battery pack 510 shown in FIG. 8A includes a module 520 with a plurality of battery cells 521 and a case 530 containing the module 520.

The case 530 includes a housing member 531 and a lid member 532 covering the housing member 531. The housing member 531 contains the module 520.

The battery pack 510 includes a mica plate 540 disposed between the module 520 and the lid member 532.

In the module 520, a plurality of the battery cells 521 are fixed by a connecting module member 520a.

In the battery pack 510, a safety valve 520c is formed in the connecting module member 520a which defines the surface of the module 520.

As shown in FIG. 8A and FIG. 8B, the mica plate 540 has a safety valve hole 545 to expose the safety valve 520c.

Even if flame or gas is generated from the module due to thermal runaway, the safety valve can exhaust the flame or gas.

Moreover, the mica plate can prevent the flame or gas from spreading.

The mica plate 540 has first fixing member holes 543a penetrating from the first main face to the second main face.

The connecting module member 520a is provided with connecting members 525 having second fixing member holes. The first fixing member holes 543a are designed to be connected to the respective second fixing member holes when the mica plate 540 is placed on the connecting module member 520a.

The mica plate 540 is fixed to the connecting module member 520a by fixing members (not shown) each having a head and a body.

The heads of the fixing members respectively cover the outlines of the first fixing member holes 543a and overlap the mica plate 540.

Focusing on a single screw-shaped fixing member, an overlapping area between the head and the mica plate 540 is defined as area S1n, while a sum of the areas S1n for the screw-shaped fixing members is defined as area S1. Then, the area S1 is not less than 5.8 × 10⁻⁶ times an area S2 of the mica plate 540.

In the case where the mica plate 540 has the first fixing member holes 543a; the module 520 is provided with the connecting members each having a second fixing member hole; and the mica plate 540 is fixed by the fixing members, the surrounding areas of the first fixing member holes 543a are likely to have high stress upon impact.

When the ratio of the area S1 to the area S2 is within the above range, the stress can be distributed to the heads of the fixing members, so that the stress can be reduced.

Thus, the mica plate 540 is resistant to damage.

In calculating the area S2 of the mica plate 540, the safety valve hole 545 is regarded as being filled.

The damage resistance of the mica plate 540 is also influenced by the thickness of the mica plate 540.

For example, when the mica plate 540 has a thickness of 1.0 mm or more, the area S1 is preferably not less than 1.4 × 10⁻³ times the area S2.

When the mica plate 540 has a thickness of 0.5 mm or more and less than 1.0 mm, the area S1 is preferably not less than 2.5 × 10⁻³ times the area S2, more preferably not less than 1.3 × 10⁻² times the area S2.

When the mica plate 540 has a thickness of 0.3 mm or more and less than 0.5 mm, the area S1 is preferably not less than 6.0 × 10⁻³ times the area S2, more preferably not less than 1.9 × 10⁻² times the area S2.

When the mica plate 540 has a thickness of 0.1 mm or more and less than 0.3 mm, the area S1 is preferably not less than 8.1 × 10⁻³ times the area S2, more preferably not less than 2.4 × 10⁻² times the area S2.

The preferred materials, shapes, and other characteristics of the battery cell 521, the case 530, the mica plate 540, and the fixing members in the battery pack 510 are the same as those of the battery cell 21, the case 30, the mica plate 40, and the fixing members in the battery pack 10 according to the first embodiment of the present invention.

### (Third embodiment)

Next, a battery pack according to a third embodiment of the present invention will be described below.

The battery pack according to the third embodiment of the present invention may include a mica plate that covers the entire circumference of a module.

Such a battery pack will be described below using drawings.

FIG. 9 illustrates a schematic cross-sectional view of an example of the battery pack according to the third embodiment of the present invention.

A battery pack 610 shown in FIG. 9 includes a module 620 with a plurality of battery cells 621 and a case 630 containing the module 620.

The case 630 includes a housing member 631 and a lid member 632 covering the housing member 631. The housing member 631 contains the module 620.

In the module 620, a plurality of the battery cells 621 are fixed by a connecting module member 620a.

The mica plate 640 has first fixing member holes (not shown) penetrating from the first main face to the second main face.

The connecting module member 620a is provided with connecting members 625 having second fixing member holes. The first fixing member holes are designed to be connected to the respective second fixing member holes when the mica plate 640 is placed on the connecting module member 620a.

The mica plate 640 is fixed to the connecting module member 620a by fixing members (not shown) each having a head and a body.

The heads of the fixing members respectively cover the outlines of the first fixing member holes and overlap the mica plate 640.

Focusing on a single screw-shaped fixing member, an overlapping area between the head and the mica plate 640 is defined as area S1n, while a sum of the areas S1n for the screw-shaped fixing members is defined as area S1. Then, the area S1 is not less than 5.8 × 10⁻⁶ times an area S2 of the mica plate 640.

In the case where the mica plate 640 has the first fixing member holes; the module 620 is provided with the connecting members each having a second fixing member hole; and the mica plate 640 is fixed by the fixing members, the surrounding areas of the first fixing member holes are likely to have high stress upon impact.

When the ratio of the area S1 to the area S2 is within the above range, the stress can be distributed to the heads of the fixing members, so that the stress can be reduced.

Thus, the mica plate 640 is resistant to damage.

The damage resistance of the mica plate 640 is also influenced by the thickness of the mica plate 640.

For example, when the mica plate 640 has a thickness of 1.0 mm or more, the area S1 is preferably not less than 1.4 × 10⁻³ times the area S2.

When the mica plate 640 has a thickness of 0.5 mm or more and less than 1.0 mm, the area S1 is preferably not less than 2.5 × 10⁻³ times the area S2, more preferably not less than 1.3 × 10⁻² times the area S2.

When the mica plate 640 has a thickness of 0.3 mm or more and less than 0.5 mm, the area S1 is preferably not less than 6.0 × 10⁻³ times the area S2, more preferably not less than 1.9 × 10⁻² times the area S2.

When the mica plate 640 has a thickness of 0.1 mm or more and less than 0.3 mm, the area S1 is preferably not less than 8.1 × 10⁻³ times the area S2, more preferably not less than 2.4 × 10⁻² times the area S2.

In the battery pack 610, the mica plate 640 covers the entire circumference of the module 620.

When the mica plate 640 covers the entire circumference of the module 620, the mica plate 640 can prevent flame or gas from spreading, regardless of the location where the flame or gas generates.

Examples of the method of covering the entire circumference of the module 620 with the mica plate 640 include a method involving molding separate parts of the mica plate 640 and placing the separate parts around the module 620.

The preferred materials and other characteristics of the battery cell 621, the case 630, the mica plate 640, and the fixing members 60 in the battery pack 610 are the same as those of the battery cell 21, the case 30, the mica plate 40, and the fixing members 60 in the battery pack 10 according to the first embodiment of the present invention.

### (Other embodiments)

In the battery packs described in the first to third embodiments, the case includes a housing member and a lid member. Yet, the case in the battery pack of the present invention may have any shape as long as it can contain the module. For example, the case may include only a housing member with no lid member, or the shape may be either a rectangular tube or a cylindrical tube.

In the battery pack described in the first embodiment, the connecting member is fixed to the module. Yet, the connecting member may be fixed to the case in the battery pack of the present invention.

In the battery pack described in the first embodiment, the adjacent battery cells are electrically connected to each other by the busbars. Yet, as long as the adjacent battery cells are electrically connected to each other, they may be connected by, for example, copper lines or a cured conductive paste.

In the description of the rivet-shaped connecting member in the battery pack described in the first embodiment, the two conditions are simultaneously satisfied, specifically, the condition that the area S1 is not less than 5.8 × 10⁻⁶ times the area S2 and the condition that the shortest distance from the outline of the first fixing member hole to the end of the crimped portion is more than 0 mm and 22 mm or less.

Yet, in the battery pack of the present invention, it suffices that at least one of the conditions that the area S1 is not less than 5.8 × 10⁻⁶ times the area S2 and that the shortest distance from the outline of the first fixing member hole to the end of the crimped portion is more than 0 mm and 22 mm or less is satisfied.

Herein, the following matters are disclosed.

The disclosure (1) relates to a battery pack, including: a module with a plurality of battery cells; a case containing the module; and a mica plate disposed between the module and the case and having a first main face and a second main face opposite to the first main face, the battery pack further including a fixing member to fix the mica plate, the mica plate having a first fixing member hole penetrating from the first main face to the second main face, at least one of the module or the case being provided with a connecting member having a second fixing member hole, the fixing member including a head and a body extending from the head, the head of the fixing member being on the first main face of the mica plate, the body of the fixing member passing through the first fixing member hole into the second fixing member hole, thereby fixing the mica plate, the head, in a planar perspective view of the mica plate, covering at least a part of an outline of the first fixing member hole and overlapping the mica plate, an overlapping area, denoted as area S1, between the head and the mica plate being not less than 5.8 × 10⁻⁶ times an area S2 of the mica plate.

The disclosure (2) relates to the battery pack according to the disclosure (1), wherein the fixing member has at least one shape selected from the group consisting of a rivet shape, a spring pin shape, a push pin shape, a lock pin shape, and a stepped pin shape.

The disclosure (3) relates to the battery pack according to the disclosure (1), wherein the fixing member has a rivet shape, the second fixing member hole is a through hole, the body of the fixing member passes through the first fixing member hole and the second fixing member hole, and the body has a crimped portion at its tip.

The disclosure (4) relates to the battery pack according to the disclosure (1), wherein the fixing member has a screw shape, the second fixing member hole is a screw hole, and the body of the fixing member is screwed into the second fixing member hole.

The disclosure (5) relates to the battery pack according to any one of the disclosures (1) to (4), wherein the mica plate is fixed by a plurality of the fixing members, and in a plan view of the mica plate, an overlapping area, denoted as area S1n, between the head of each fixing member and the mica plate is larger than an opening area S3 of each first fixing member hole.

The disclosure (6) relates to a battery pack, including: a module with a plurality of battery cells; a case containing the module; and a mica plate disposed between the module and the case and having a first main face and a second main face opposite to the first main face, the battery pack further including a fixing member to fix the mica plate, the mica plate having a first fixing member hole penetrating from the first main face to the second main face, at least one of the module or the case being provided with a connecting member having a second fixing member hole, the fixing member having a rivet shape and including a head and a body extending from the head, the head of the fixing member being on the first main face of the mica plate, the body of the fixing member passing through the first fixing member hole and the second fixing member hole, the body having a crimped portion at its tip, a shortest distance from an outline of the first fixing member hole to an end of the crimped portion being more than 0 mm and 22 mm or less in a planar perspective view of the mica plate.

The disclosure (7) relates to the battery pack according to the disclosure (6), wherein, in a planar perspective view of the mica plate, the shortest distance from an outline of the first fixing member hole to an end of the crimped portion is longer than a shortest distance from the outline of the first fixing member hole to an end of the head.

The disclosure (8) relates to the battery pack according to the disclosure (6) or (7), wherein the mica plate is fixed by a plurality of the fixing members.

The disclosure (9) relates to the battery pack according to any one of the disclosures (1) to (8), wherein the mica plate is substantially tetragonal in a plan view, the mica plate in a plan view has an outline including a first side and a second side opposite to the first side, and the mica plate has a pair of the first fixing holes, with one of the holes being at an end portion to which the first side belongs and the other being at an end potion to which the second side belongs.

The disclosure (10) relates to the battery pack according to any one of the disclosures (1) to (9), wherein an annular washer is disposed between the head and the mica plate, and the body passes through an annular opening of the washer.

The disclosure (11) relates to the battery pack according to a combination of any of the disclosures (1) to (10), wherein the mica plate has a ridge extending in a first direction on its first main face side.

The disclosure (12) relates to the battery pack according to any one of the disclosures (1) to (10), wherein the mica plate has a first protrusion on its first main face side.

The disclosure (13) relates to the battery pack according to any one of the disclosures (1) to (12), wherein the mica plate has a thickness T of 0.1 mm or more and 3.0 mm or less.

The disclosure (14) relates to the battery pack according to any one of the disclosures (1) to (13), wherein the mica plate has a Young's modulus of 110 GPa or less.

The disclosure (15) relates to the battery pack according to any one of the disclosures (1) to (14), wherein the module has a safety valve on its surface, the mica plate is present between the surface with the safety valve of the module and the case, and the mica plate has a safety valve hole to expose the safety valve.

The disclosure (16) relates to the battery pack according to the disclosure (15), wherein the case includes a housing member and a lid member covering the housing member, the module is contained in the housing member such that the safety valve is closer to the lid member, and the mica plate is disposed between the module and the lid member.

The disclosure (17) relates to a structure, including: a mica plate having a first main face and a second main face opposite to the first main face and having a first fixing member hole penetrating from the first main face to the second main face; a substrate including a connecting member having a second fixing member hole; and a fixing member fixing the mica plate, the fixing member including a head and a body extending from the head, the head of the fixing member being on the first main face of the mica plate, the body of the fixing member passing through the first fixing member hole into the second fixing member hole, thereby fixing the mica plate, the head, in a planar perspective view of the mica plate, covering at least a part of an outline of the first fixing member hole and overlapping the mica plate, an overlapping area, denoted as area S1, between the head and the mica plate being not less than 5.8 × 10⁻⁶ times an area S2 of the mica plate.

The disclosure (18) relates to a structure, including: a mica plate having a first main face and a second main face opposite to the first main face and having a first fixing member hole penetrating from the first main face to the second main face; a substrate including a connecting member having a second fixing member hole; and a fixing member fixing the mica plate, the fixing member having a rivet shape and including a head and a body extending from the head, the head of the fixing member being on the first main face of the mica plate, the body of the fixing member passing through the first fixing member hole and the second fixing member hole, the body having a crimped portion at its tip, a shortest distance from an outline of the first fixing member hole to an end of the crimped portion being more than 0 mm and 22 mm or less in a planar perspective view of the mica plate.

The disclosure (19) relates to a method for producing a mica plate, the method including: molding a mica prepreg in a mold through hot pressing into a mica plate having a first main face and a second main face opposite to the first main face; and forming a first fixing member hole penetrating from the first main face to the second main face in the mica plate.

### EXAMPLES

An impact simulation was performed using the following model designed for simulation to examine the stress in a mica plate when first fixing member holes are formed therein and then the mica plate is fixed by fixing members.

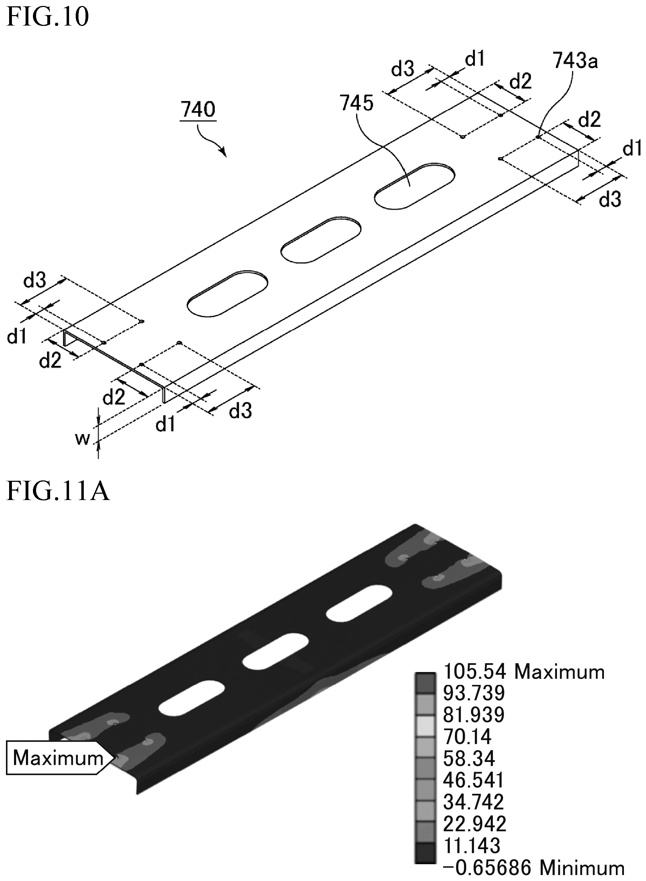

FIG. 10 illustrates a mica plate model designed for impact simulation.

A mica plate 740 shown in FIG. 10 is tetragonal in a plan view and has a long-side length of 500 mm and a short-side length of 120 mm.

As shown in FIG. 10, both ends of the mica plate 740 in the short-side direction are bent downward, and each bent portion has a width (the distance indicated with "w" in FIG. 10) of 20 mm.

As shown in FIG. 10, the mica plate 740 has three racetrack-shaped openings (safety valve holes) 745.

Each racetrack-shaped opening 745 has a shape in which semicircles with a diameter of 30 mm are connected to both short sides of a rectangle having a short side length of 30 mm and a long side length of 80 mm.

The three racetrack-shaped openings 745 are disposed such that the centers of gravity of the racetrack-shaped openings 745 are at the center in the short-side direction of the mica plate 740 and at distances of 135 mm, 250 mm, and 365 mm, respectively, from an end of the mica plate 740 in the long-side direction.

The mica plate 740 has four fixing member holes 743a. Each fixing member hole 743a is located 10 mm (as indicated by "d1" in FIG. 10) from one end in the long-side direction and 40 mm (as indicated by "d2" in FIG. 10) from one end in the short-side direction.

The mica plate 740 also has four fixing member holes 743a. Each fixing member hole 743a is located 50 mm (as indicated by "d3" in FIG. 10) from one end in the long-side direction and 40 mm (as indicated by "d2" in FIG. 10) from one end in the short-side direction.

In other words, the mica plate 740 has eight fixing member holes 743a.

Each fixing member hole 743a is circular in a plan view, and its diameter has been set to 3.4 mm.

Each fixing member to fix the mica plate 740 has been designed to have a body with a diameter of 3.2 mm and a circular head extending from the body.

The density, Young's modulus, and thickness of the mica plate 740 as well as the area of the head of the fixing member as viewed from the head side have been set as indicated in Table 1.

**[Table 1]**

| | Mica plate | | | | Fixing member | | | | S1/S2 | Maximum stress | Displacement |
|---|---|---|---|---|---|---|---|---|---|---|---|
| | Thickness | Density | Young's modulus | Area S2 | Area of head | Area S1n | Number of fixing members | Area S1 | | | |
| | [mm] | [g/cm³] | [MPa] | [mm²] | [mm²] | [mm²] | [-] | [mm²] | | [MPa] | [mm] |
| Experimental Example 1-1 | 1 | 2 | 40 | 60000 | 3.2 | 3.2 | 8 | 25.6 | 4.27 × 10⁻⁴ | 105.5 | 1.90 |
| Experimental Example 1-2 | 1 | 2 | 40 | 60000 | 4.5 | 4.5 | 8 | 36.0 | 6.00 × 10⁻⁴ | 105.9 | 1.89 |
| Experimental Example 1-3 | 1 | 2 | 40 | 60000 | 5.8 | 5.8 | 8 | 46.4 | 7.73 × 10⁻⁴ | 101.3 | 1.87 |
| Experimental Example 1-4 | 1 | 2 | 40 | 60000 | 29.4 | 29.4 | 8 | 235.2 | 3.92 × 10⁻³ | 71.6 | 1.76 |
| Experimental Example 2-1 | 1 | 1.7 | 40 | 60000 | 3.2 | 3.2 | 8 | 25.6 | 4.27 × 10⁻⁴ | 106.7 | 1.91 |
| Experimental Example 2-2 | 1 | 1.7 | 40 | 60000 | 5.8 | 5.8 | 8 | 46.4 | 7.73 × 10⁻⁴ | 101.9 | 1.88 |
| Experimental Example 2-3 | 1 | 1.7 | 40 | 60000 | 29.4 | 29.4 | 8 | 235.2 | 3.92 × 10⁻³ | 74.4 | 1.76 |
| Experimental Example 3-1 | 1 | 2.3 | 40 | 60000 | 3.2 | 3.2 | 8 | 25.6 | 4.27 × 10⁻⁴ | 104.6 | 1.89 |
| Experimental Example 3-2 | 1 | 2.3 | 40 | 60000 | 5.8 | 5.8 | 8 | 46.4 | 7.73 × 10⁻⁴ | 101.5 | 1.87 |
| Experimental Example 3-3 | 1 | 2.3 | 40 | 60000 | 29.4 | 29.4 | 8 | 235.2 | 3.92 × 10⁻³ | 70.4 | 1.75 |
| Experimental Example 4-1 | 1 | 2 | 20 | 60000 | 3.2 | 3.2 | 8 | 25.6 | 4.27 × 10⁻⁴ | 85.1 | 3.15 |
| Experimental Example 4-2 | 1 | 2 | 20 | 60000 | 5.8 | 5.8 | 8 | 46.4 | 7.73 × 10⁻⁴ | 81.4 | 3.13 |
| Experimental Example 4-3 | 1 | 2 | 20 | 60000 | 29.4 | 29.4 | 8 | 235.2 | 3.92 × 10⁻³ | 60.1 | 2.95 |
| Experimental Example 5-1 | 1 | 2 | 60 | 60000 | 3.2 | 3.2 | 8 | 25.6 | 4.27 × 10⁻⁴ | 112.9 | 1.35 |
| Experimental Example 5-2 | 1 | 2 | 60 | 60000 | 5.8 | 5.8 | 8 | 46.4 | 7.73 × 10⁻⁴ | 105.8 | 1.32 |
| Experimental Example 5-3 | 1 | 2 | 60 | 60000 | 29.4 | 29.4 | 8 | 235.2 | 3.92 × 10⁻³ | 76.3 | 1.24 |
| Experimental Example 6-1 | 1.5 | 2 | 40 | 60000 | 3.2 | 3.2 | 8 | 25.6 | 4.27 × 10⁻⁴ | 25.8 | 0.36 |
| Experimental Example 6-2 | 1.5 | 2 | 40 | 60000 | 5.8 | 5.8 | 8 | 46.4 | 7.73 × 10⁻⁴ | 23.6 | 0.46 |
| Experimental Example 6-3 | 1.5 | 2 | 40 | 60000 | 29.4 | 29.4 | 8 | 235.2 | 3.92 × 10⁻³ | 17.8 | 0.43 |
| Experimental Example 7-1 | 0.5 | 2 | 40 | 60000 | 3.2 | 3.2 | 8 | 25.6 | 4.27 × 10⁻⁴ | 284.3 | 4.10 |
| Experimental Example 7-2 | 0.5 | 2 | 40 | 60000 | 5.8 | 5.8 | 8 | 46.4 | 7.73 × 10⁻⁴ | 233.4 | 4.05 |
| Experimental Example 7-3 | 0.5 | 2 | 40 | 60000 | 29.4 | 29.4 | 8 | 235.2 | 3.92 × 10⁻³ | 158.9 | 5.04 |
| Experimental Example 8-1 | 0.3 | 2 | 40 | 60000 | 3.2 | 3.2 | 8 | 25.6 | 4.27 × 10⁻⁴ | 395.3 | 8.34 |
| Experimental Example 8-2 | 0.3 | 2 | 40 | 60000 | 5.8 | 5.8 | 8 | 46.4 | 7.73 × 10⁻⁴ | 326.4 | 8.23 |
| Experimental Example 8-3 | 0.3 | 2 | 40 | 60000 | 29.4 | 29.4 | 8 | 235.2 | 3.92 × 10⁻³ | 216.5 | 7.85 |
| Experimental Example 9-1 | 0.1 | 2 | 40 | 60000 | 3.2 | 3.2 | 8 | 25.6 | 4.27 × 10⁻⁴ | 432.4 | 12.95 |
| Experimental Example 9-2 | 0.1 | 2 | 40 | 60000 | 5.8 | 5.8 | 8 | 46.4 | 7.73 × 10⁻⁴ | 371.5 | 12.88 |
| Experimental Example 9-3 | 0.1 | 2 | 40 | 60000 | 29.4 | 29.4 | 8 | 235.2 | 3.92 × 10⁻³ | 243.0 | 12.54 |

The stress on the mica plate 740 was simulated under conditions where an impact of 30 G and 12 ms was applied in the thickness direction of the mica plate 740. Ansys LS-DYNA was used as simulation software.

Table 1 shows the maximum stress and the displacement in each mica plate 740 set in the simulation.

The stress contour maps and displacement contour maps are shown in drawings.

FIG. 11A illustrates a stress contour map of the entire mica plate in Experimental Example 1-1 in the impact simulation.

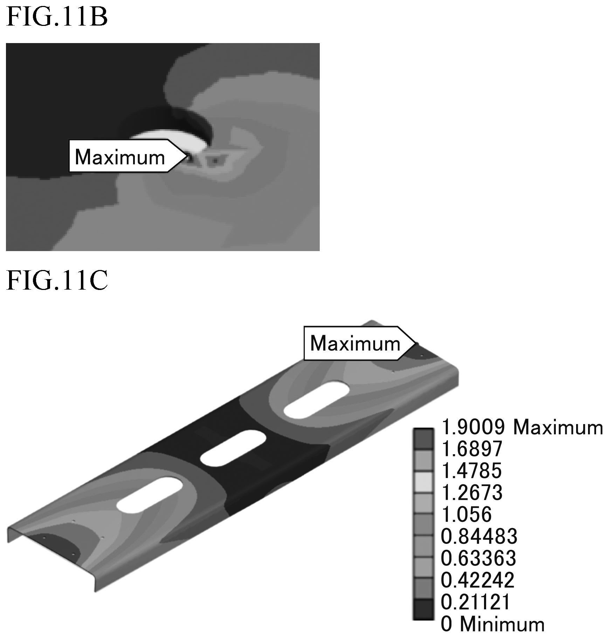

FIG. 11B illustrates an enlarged stress contour map of the maximum stress region in the mica plate in Experimental Example 1-1 in the impact simulation.

FIG. 11C illustrates a displacement contour map of the entire mica plate in Experimental Example 1-1 in the impact simulation.

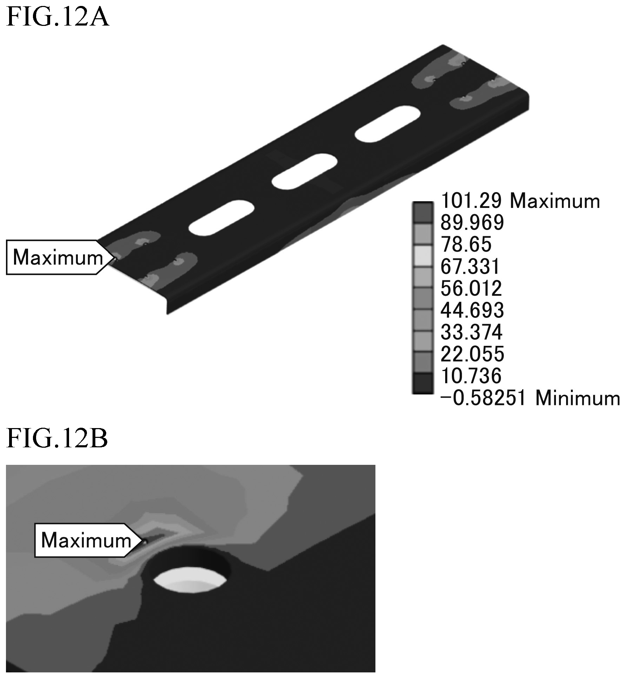

FIG. 12A illustrates a stress contour map of the entire mica plate in Experimental Example 1-3 in the impact simulation.

FIG. 12B illustrates an enlarged stress contour map of the maximum stress region in the mica plate in Experimental Example 1-3 in the impact simulation.

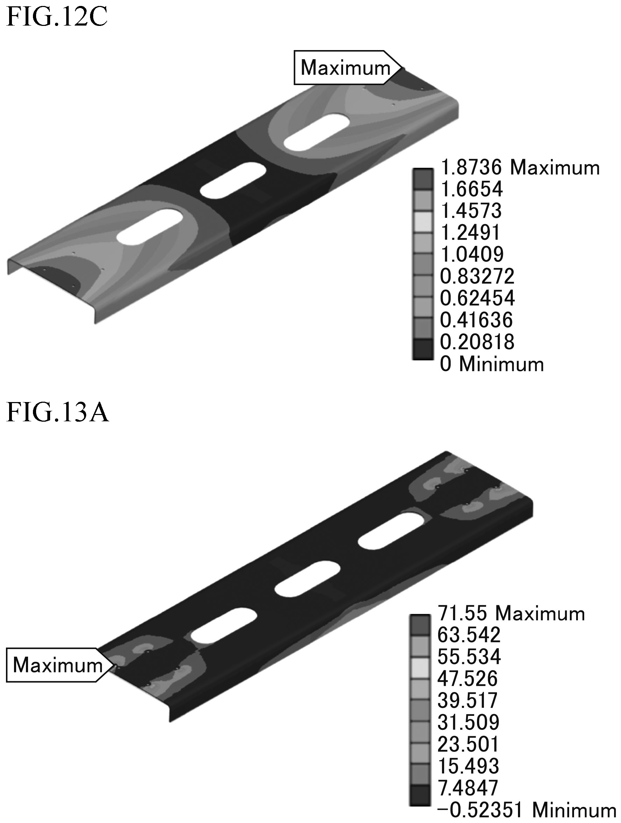

FIG. 12C illustrates a displacement contour map of the entire mica plate in Experimental Example 1-3 in the impact simulation.

FIG. 13A illustrates a stress contour map of the entire mica plate in Experimental Example 1-4 in the impact simulation.

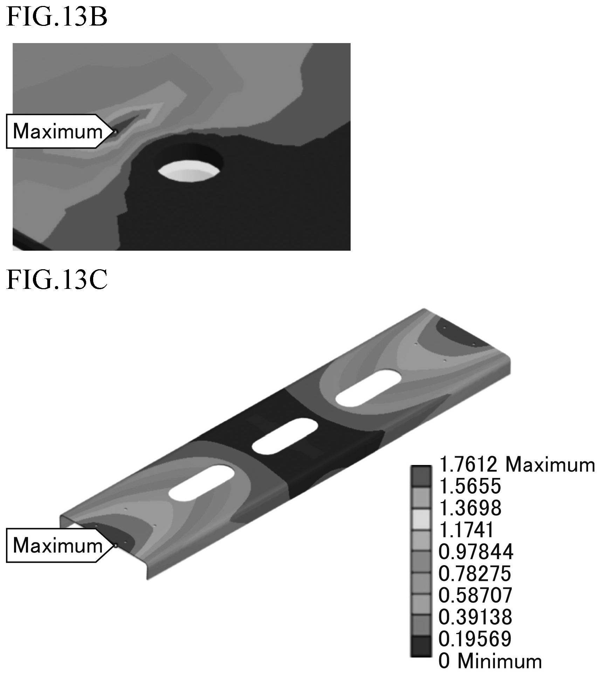

FIG. 13B illustrates an enlarged stress contour map of the maximum stress region in the mica plate in Experimental Example 1-4 in the impact simulation.

FIG. 13C illustrates a displacement contour map of the entire mica plate in Experimental Example 1-4 in the impact simulation.

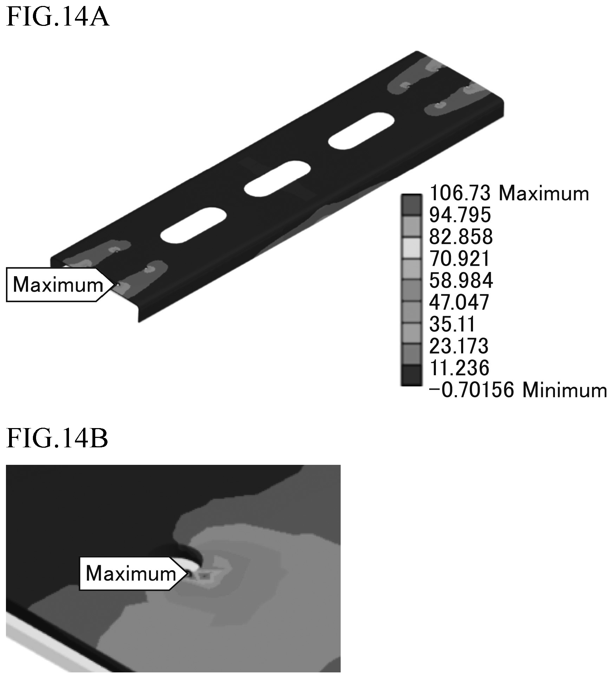

FIG. 14A illustrates a stress contour map of the entire mica plate in Experimental Example 2-1 in the impact simulation.

FIG. 14B illustrates an enlarged stress contour map of the maximum stress region in the mica plate in Experimental Example 2-1 in the impact simulation.

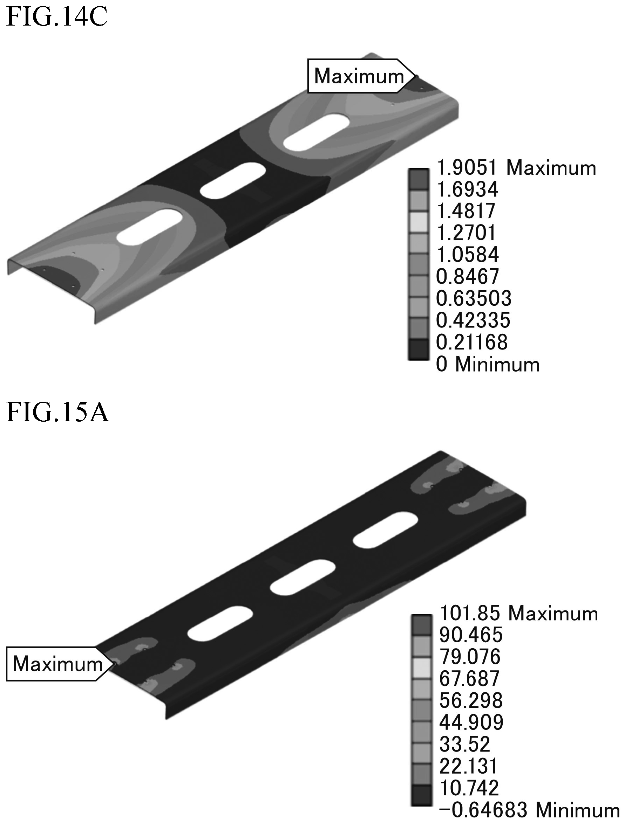

FIG. 14C illustrates a displacement contour map of the entire mica plate in Experimental Example 2-1 in the impact simulation.

FIG. 15A illustrates a stress contour map of the entire mica plate in Experimental Example 2-2 in the impact simulation.

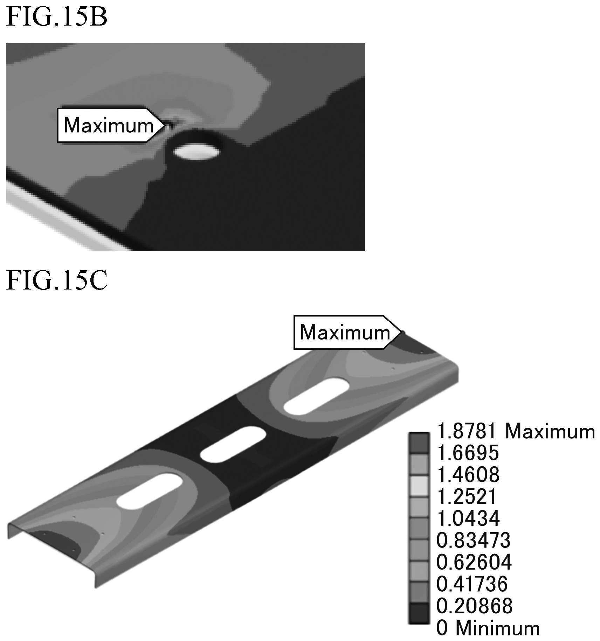

FIG. 15B illustrates an enlarged stress contour map of the maximum stress region in the mica plate in Experimental Example 2-2 in the impact simulation.

FIG. 15C illustrates a displacement contour map of the entire mica plate in Experimental Example 2-2 in the impact simulation.

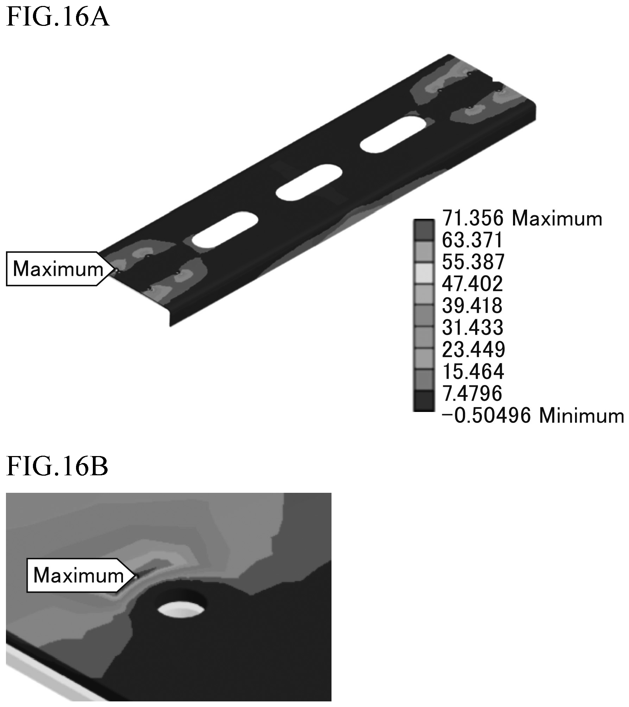

FIG. 16A illustrates a stress contour map of the entire mica plate in Experimental Example 2-3 in the impact simulation.

FIG. 16B illustrates an enlarged stress contour map of the maximum stress region in the mica plate in Experimental Example 2-3 in the impact simulation.

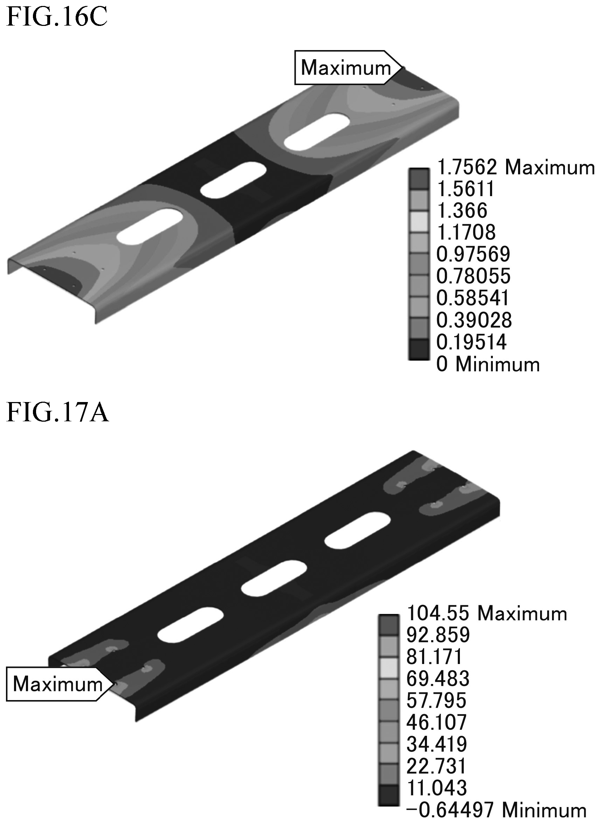

FIG. 16C illustrates a displacement contour map of the entire mica plate in Experimental Example 2-3 in the impact simulation.

FIG. 17A illustrates a stress contour map of the entire mica plate in Experimental Example 3-1 in the impact simulation.

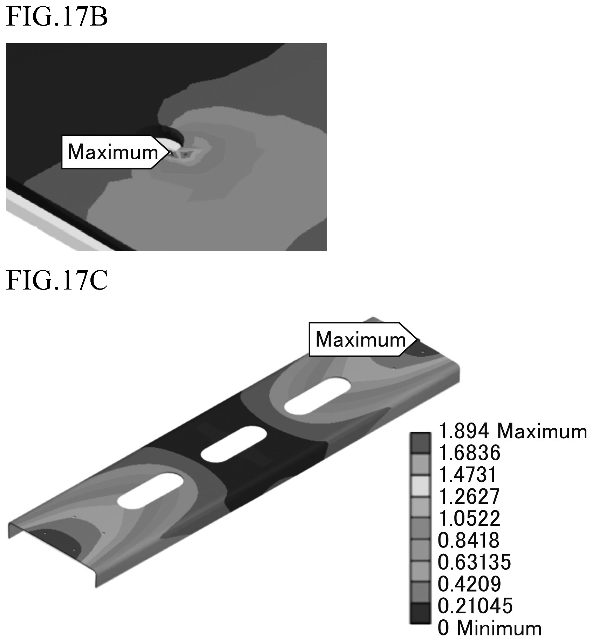

FIG. 17B illustrates an enlarged stress contour map of the maximum stress region in the mica plate in Experimental Example 3-1 in the impact simulation.

FIG. 17C illustrates a displacement contour map of the entire mica plate in Experimental Example 3-1 in the impact simulation.

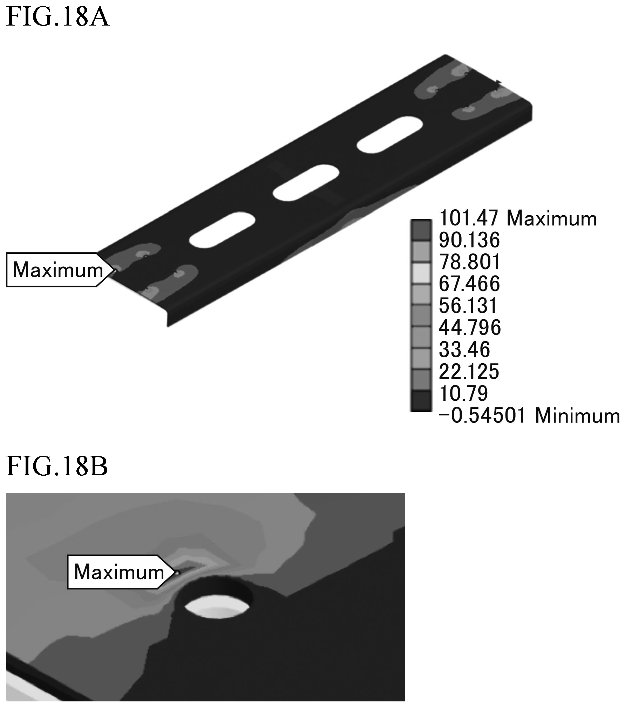

FIG. 18A illustrates a stress contour map of the entire mica plate in Experimental Example 3-2 in the impact simulation.

FIG. 18B illustrates an enlarged stress contour map of the maximum stress region in the mica plate in Experimental Example 3-2 in the impact simulation.

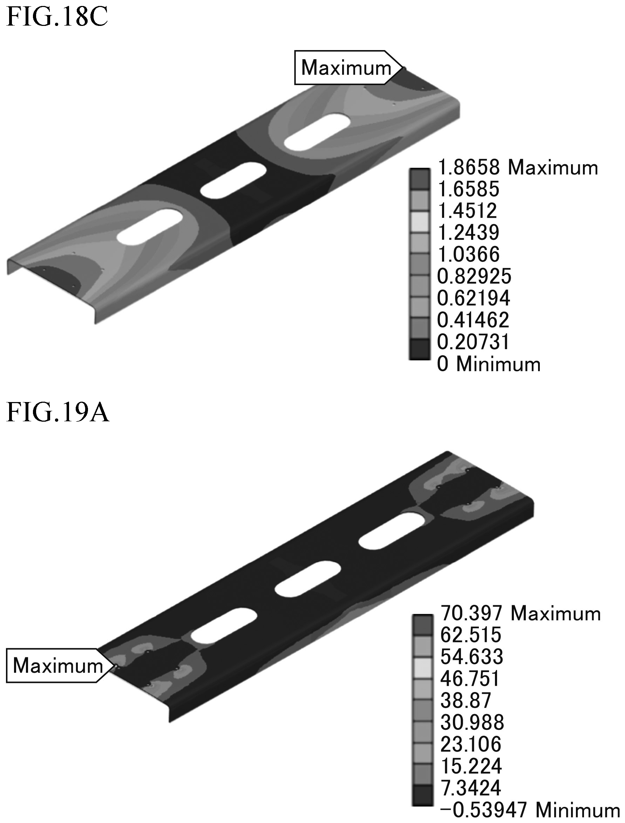

FIG. 18C illustrates a displacement contour map of the entire mica plate in Experimental Example 3-2 in the impact simulation.

FIG. 19A illustrates a stress contour map of the entire mica plate in Experimental Example 3-3 in the impact simulation.

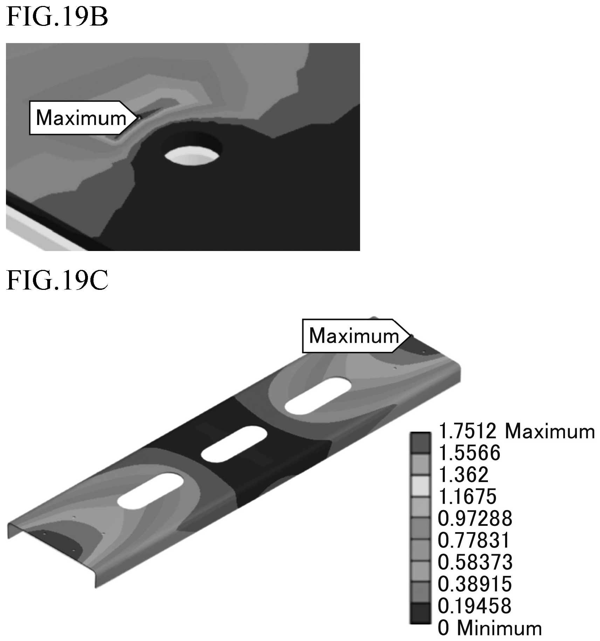

FIG. 19B illustrates an enlarged stress contour map of the maximum stress region in the mica plate in Experimental Example 3-3 in the impact simulation.

FIG. 19C illustrates a displacement contour map of the entire mica plate in Experimental Example 3-3 in the impact simulation.

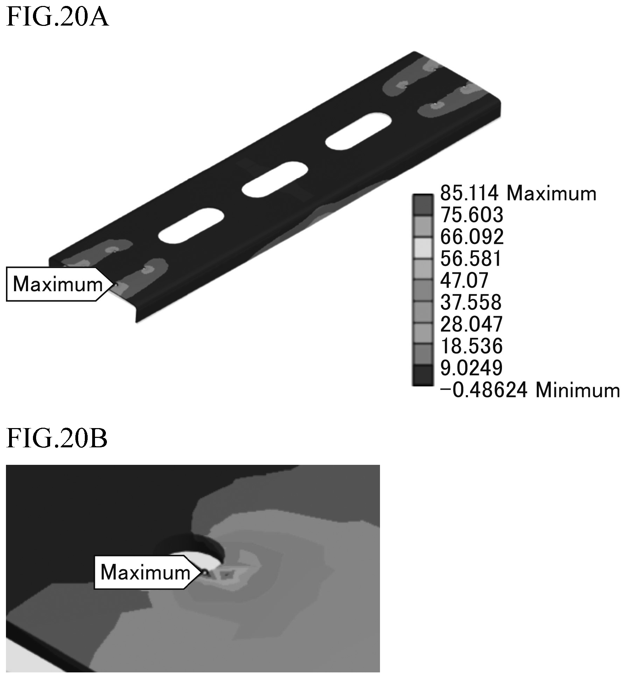

FIG. 20A illustrates a stress contour map of the entire mica plate in Experimental Example 4-1 in the impact simulation.

FIG. 20B illustrates an enlarged stress contour map of the maximum stress region in the mica plate in Experimental Example 4-1 in the impact simulation.

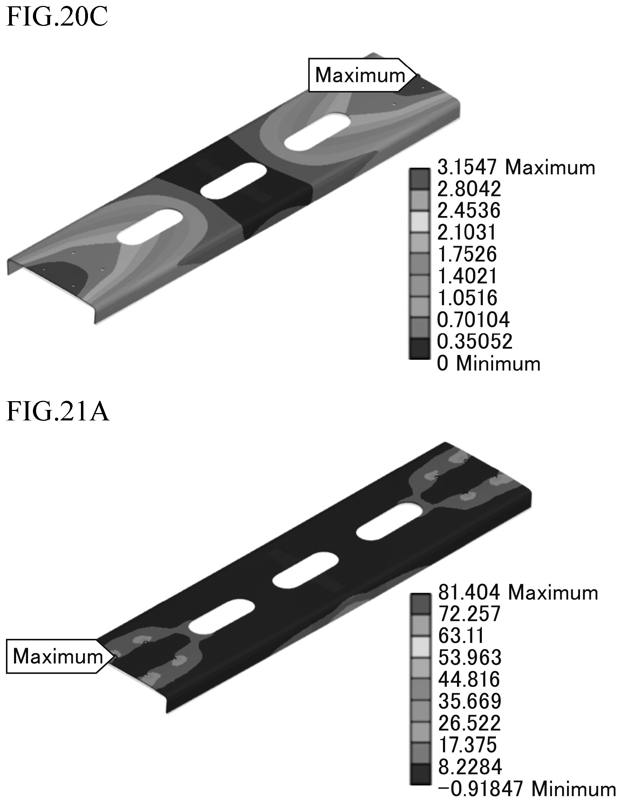

FIG. 20C illustrates a displacement contour map of the entire mica plate in Experimental Example 4-1 in the impact simulation.

FIG. 21A illustrates a stress contour map of the entire mica plate in Experimental Example 4-2 in the impact simulation.

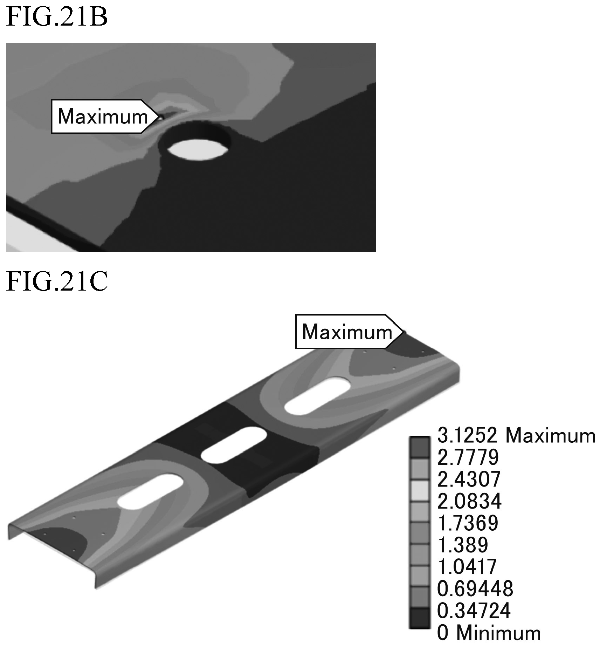

FIG. 21B illustrates an enlarged stress contour map of the maximum stress region in the mica plate in Experimental Example 4-2 in the impact simulation.

FIG. 21C illustrates a displacement contour map of the entire mica plate in Experimental Example 4-2 in the impact simulation.

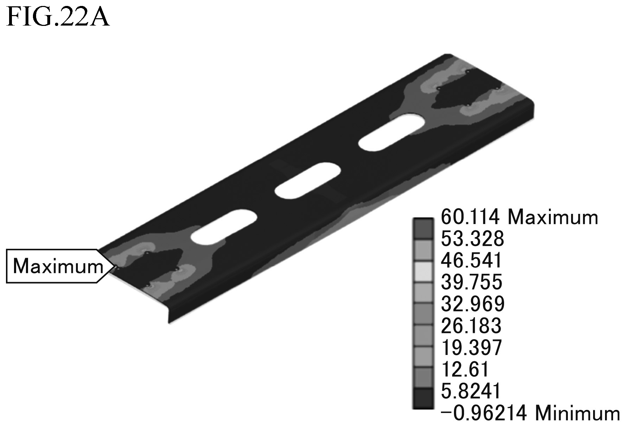

FIG. 22A illustrates a stress contour map of the entire mica plate in Experimental Example 4-3 in the impact simulation.

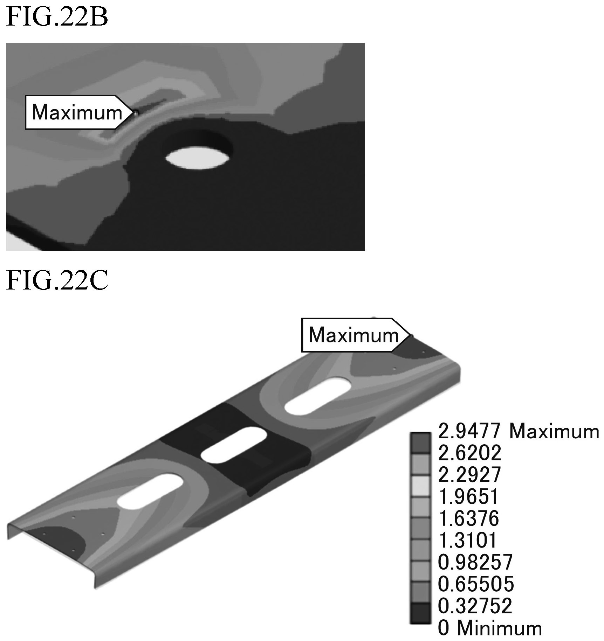

FIG. 22B illustrates an enlarged stress contour map of the maximum stress region in the mica plate in Experimental Example 4-3 in the impact simulation.

FIG. 22C illustrates a displacement contour map of the entire mica plate in Experimental Example 4-3 in the impact simulation.

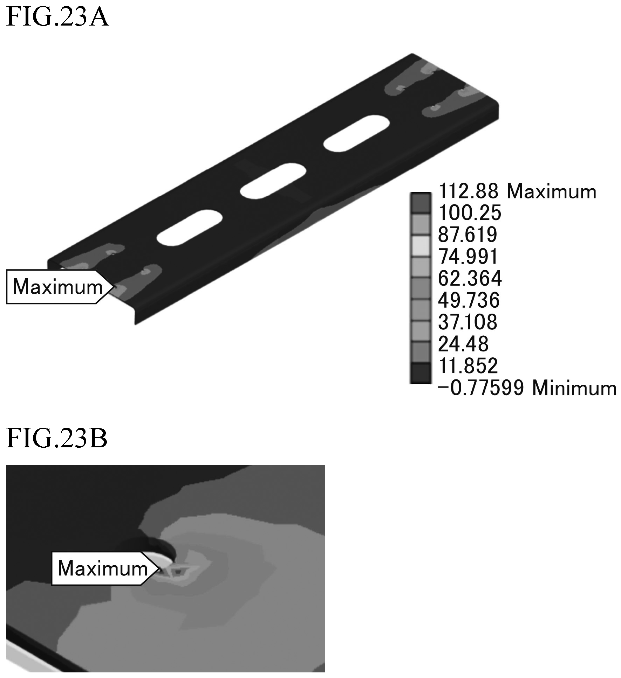

FIG. 23A illustrates a stress contour map of the entire mica plate in Experimental Example 5-1 in the impact simulation.

FIG. 23B illustrates an enlarged stress contour map of the maximum stress region in the mica plate in Experimental Example 5-1 in the impact simulation.

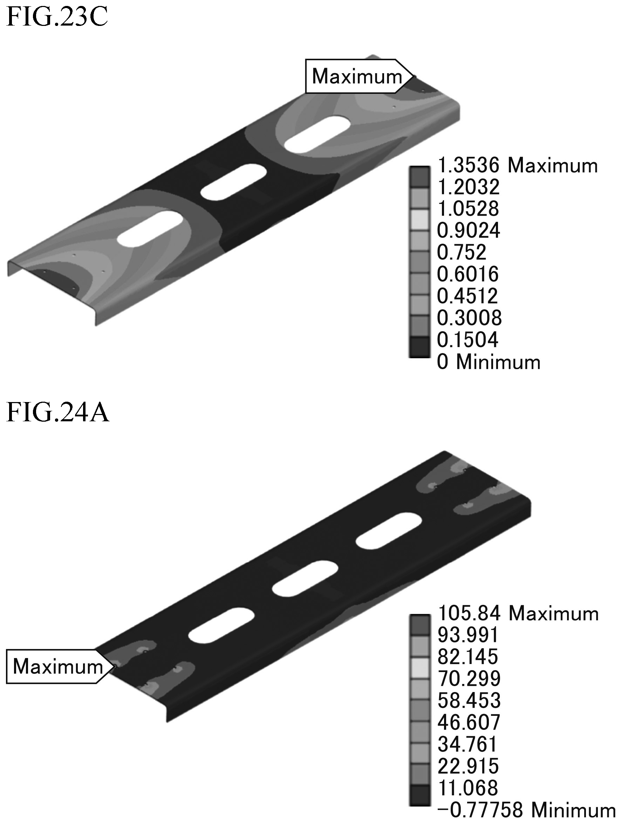

FIG. 23C illustrates a displacement contour map of the entire mica plate in Experimental Example 5-1 in the impact simulation.

FIG. 24A illustrates a stress contour map of the entire mica plate in Experimental Example 5-2 in the impact simulation.

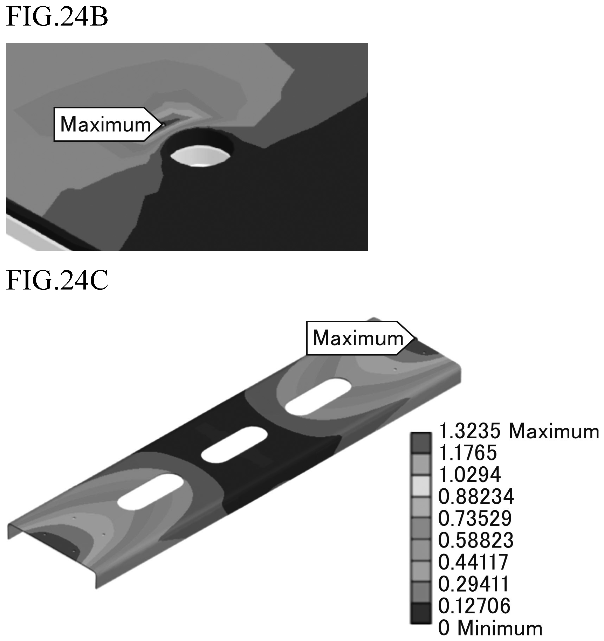

FIG. 24B illustrates an enlarged stress contour map of the maximum stress region in the mica plate in Experimental Example 5-2 in the impact simulation.

FIG. 24C illustrates a displacement contour map of the entire mica plate in Experimental Example 5-2 in the impact simulation.

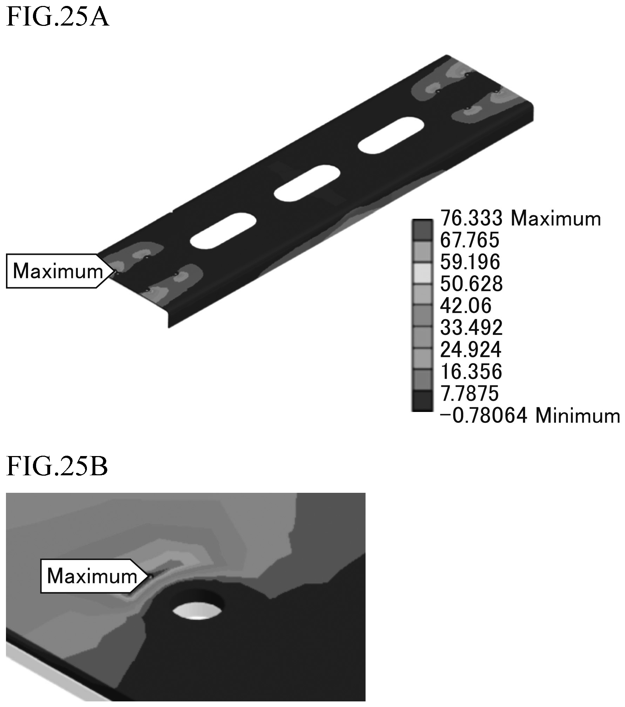

FIG. 25A illustrates a stress contour map of the entire mica plate in Experimental Example 5-3 in the impact simulation.

FIG. 25B illustrates an enlarged stress contour map of the maximum stress region in the mica plate in Experimental Example 5-3 in the impact simulation.

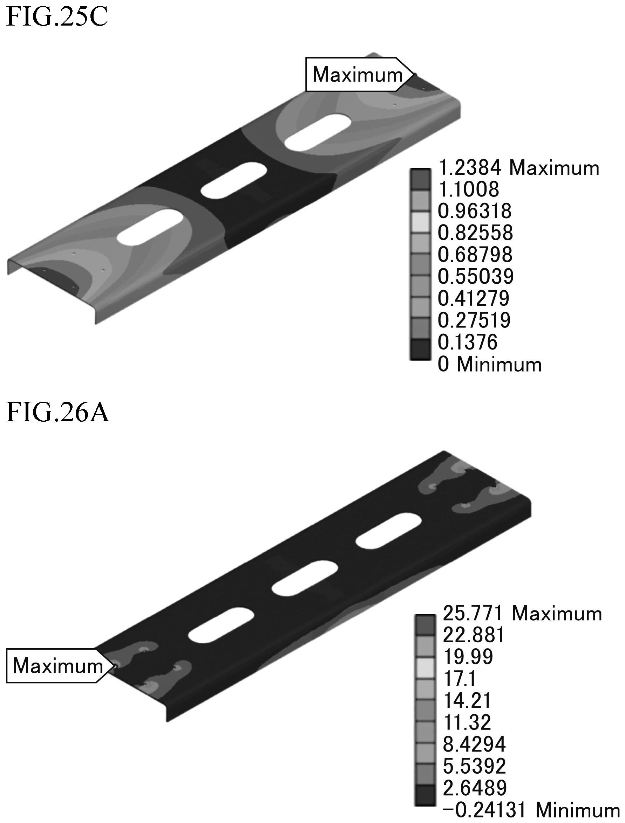

FIG. 25C illustrates a displacement contour map of the entire mica plate in Experimental Example 5-3 in the impact simulation.

FIG. 26A illustrates a stress contour map of the entire mica plate in Experimental Example 6-1 in the impact simulation.

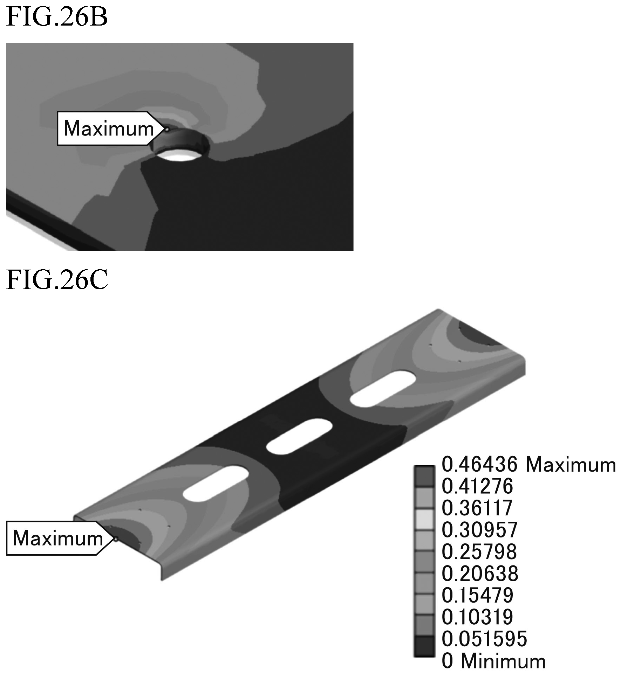

FIG. 26B illustrates an enlarged stress contour map of the maximum stress region in the mica plate in Experimental Example 6-1 in the impact simulation.

FIG. 26C illustrates a displacement contour map of the entire mica plate in Experimental Example 6-1 in the impact simulation.

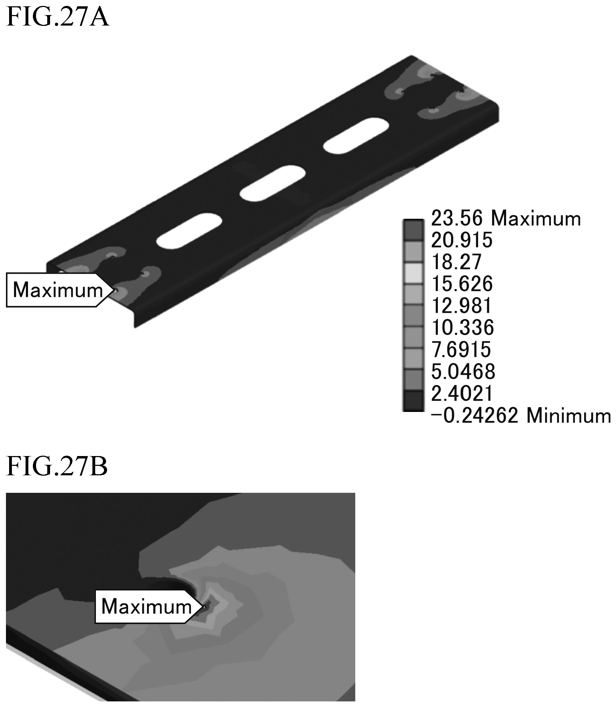

FIG. 27A illustrates a stress contour map of the entire mica plate in Experimental Example 6-2 in the impact simulation.

FIG. 27B illustrates an enlarged stress contour map of the maximum stress region in the mica plate in Experimental Example 6-2 in the impact simulation.

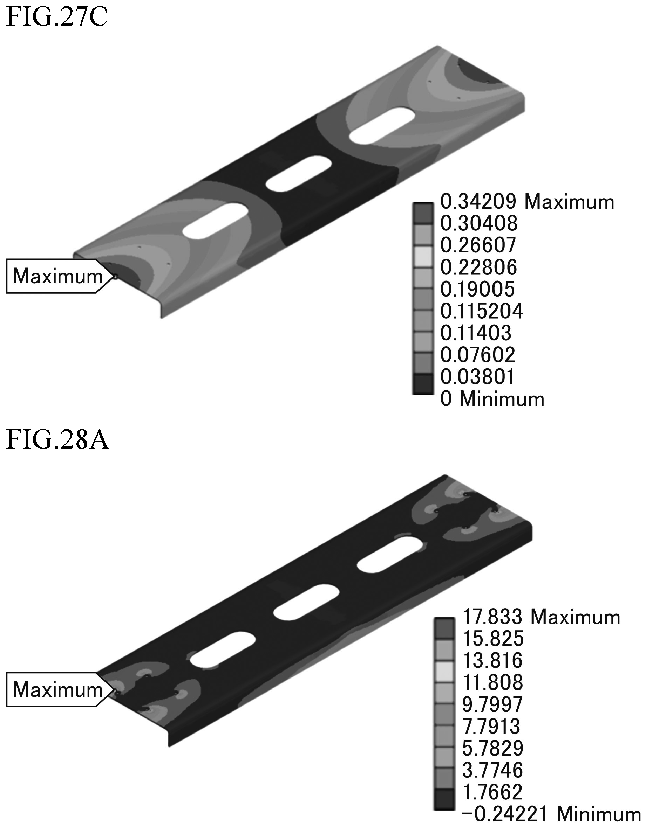

FIG. 27C illustrates a displacement contour map of the entire mica plate in Experimental Example 6-2 in the impact simulation.

FIG. 28A illustrates a stress contour map of the entire mica plate in Experimental Example 6-3 in the impact simulation.

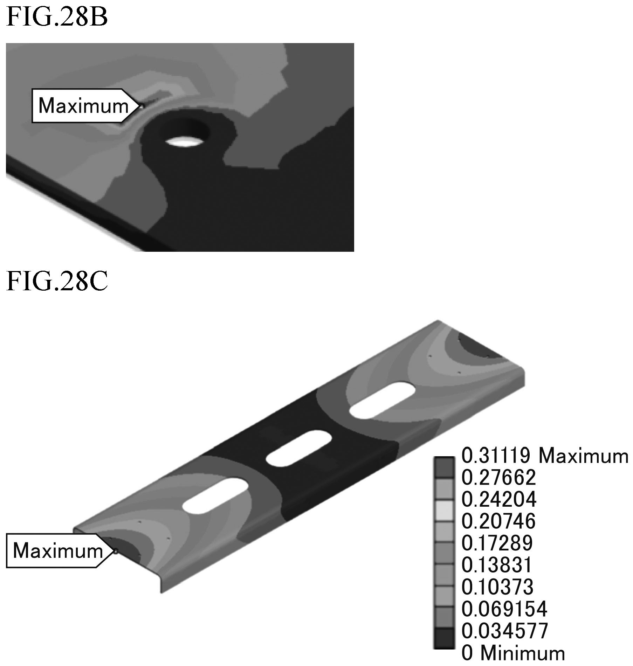

FIG. 28B illustrates an enlarged stress contour map of the maximum stress region in the mica plate in Experimental Example 6-3 in the impact simulation.

FIG. 28C illustrates a displacement contour map of the entire mica plate in Experimental Example 6-3 in the impact simulation.

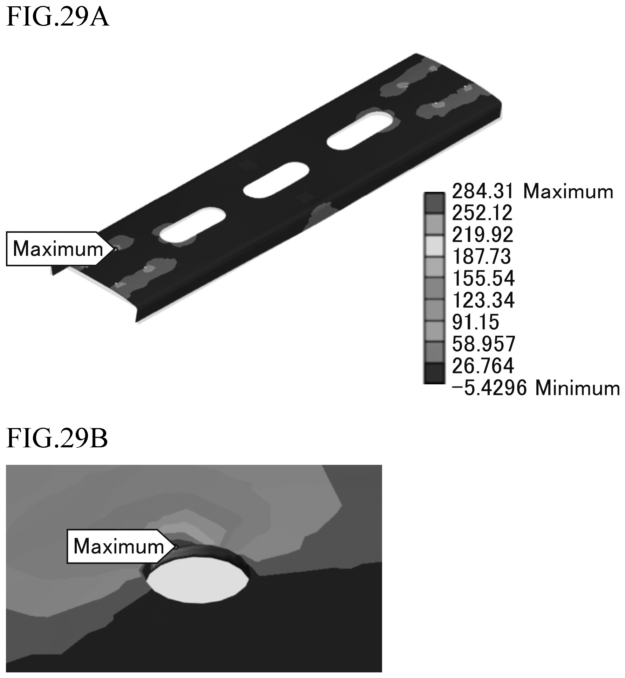

FIG. 29A illustrates a stress contour map of the entire mica plate in Experimental Example 7-1 in the impact simulation.

FIG. 29B illustrates an enlarged stress contour map of the maximum stress region in the mica plate in Experimental Example 7-1 in the impact simulation.

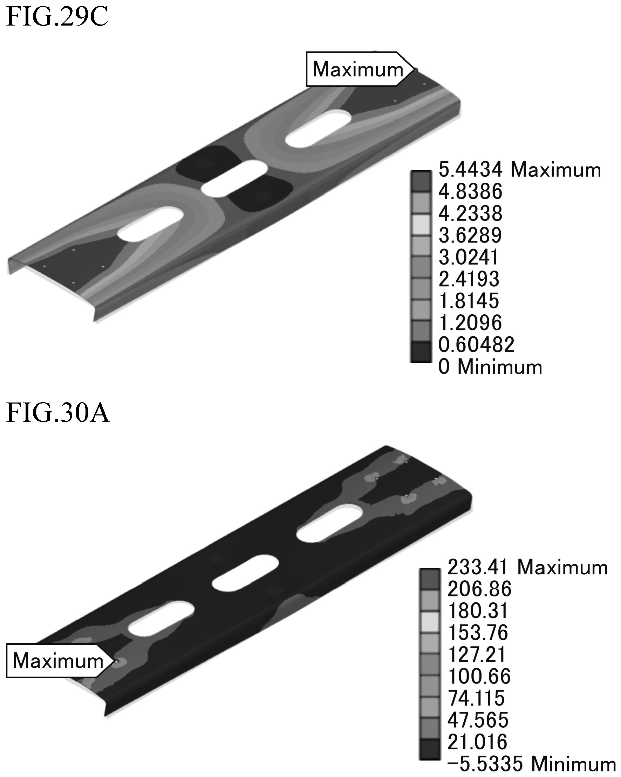

FIG. 29C illustrates a displacement contour map of the entire mica plate in Experimental Example 7-1 in the impact simulation.

FIG. 30A illustrates a stress contour map of the entire mica plate in Experimental Example 7-2 in the impact simulation.

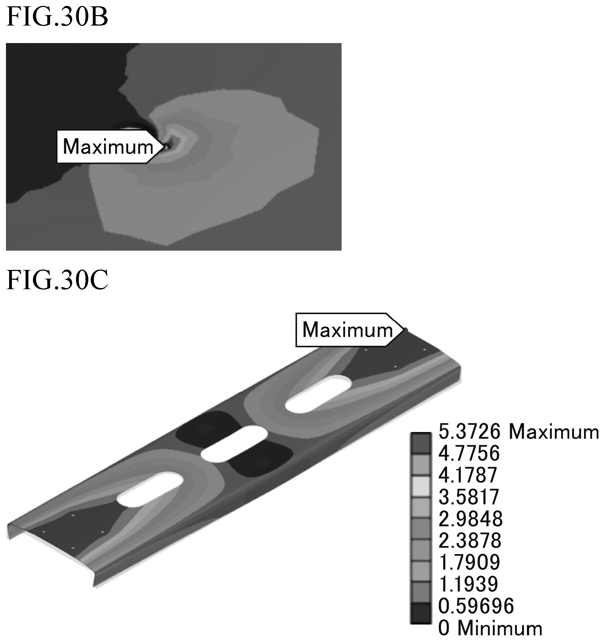

FIG. 30B illustrates an enlarged stress contour map of the maximum stress region in the mica plate in Experimental Example 7-2 in the impact simulation.

FIG. 30C illustrates a displacement contour map of the entire mica plate in Experimental Example 7-2 in the impact simulation.

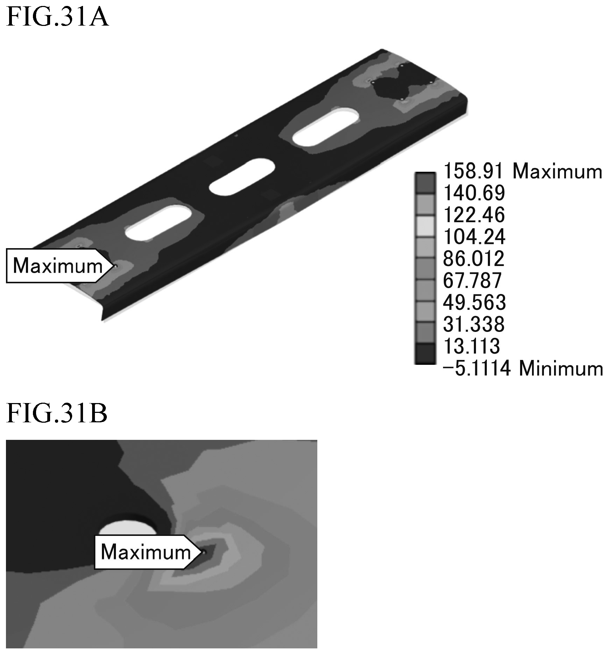

FIG. 31A illustrates a stress contour map of the entire mica plate in Experimental Example 7-3 in the impact simulation.

FIG. 31B illustrates an enlarged stress contour map of the maximum stress region in the mica plate in Experimental Example 7-3 in the impact simulation.

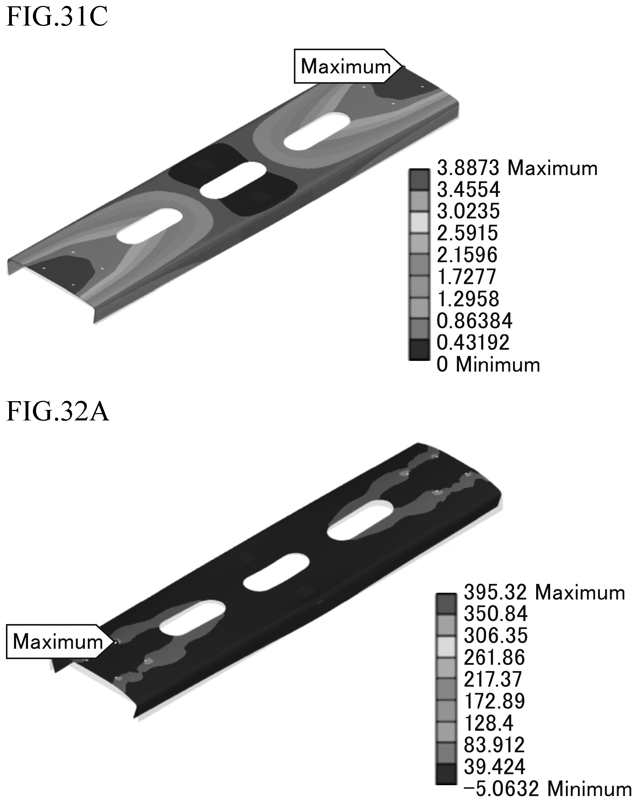

FIG. 31C illustrates a displacement contour map of the entire mica plate in Experimental Example 7-3 in the impact simulation.

FIG. 32A illustrates a stress contour map of the entire mica plate in Experimental Example 8-1 in the impact simulation.

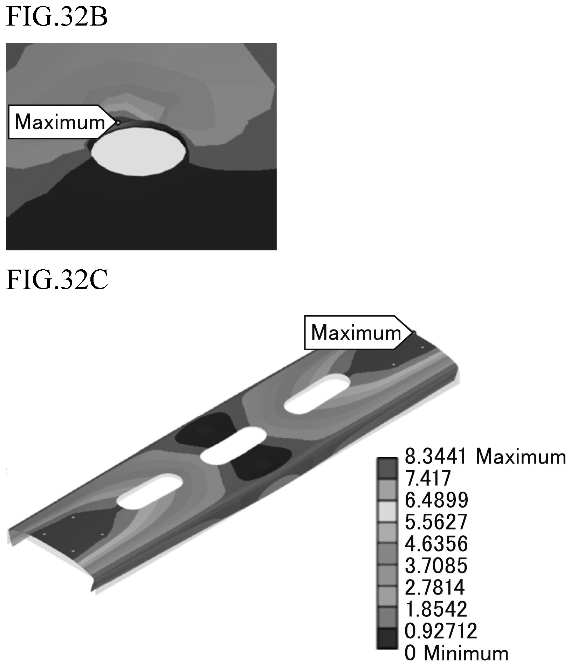

FIG. 32B illustrates an enlarged stress contour map of the maximum stress region in the mica plate in Experimental Example 8-1 in the impact simulation.

FIG. 32C illustrates a displacement contour map of the entire mica plate in Experimental Example 8-1 in the impact simulation.

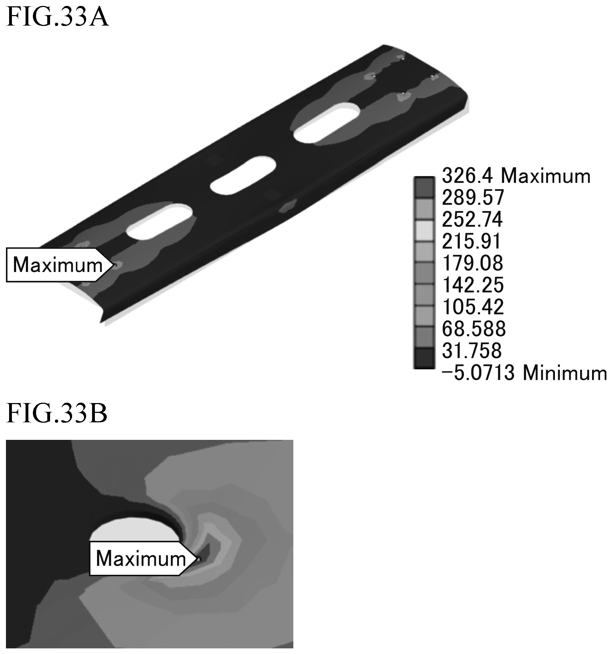

FIG. 33A illustrates a stress contour map of the entire mica plate in Experimental Example 8-2 in the impact simulation.

FIG. 33B illustrates an enlarged stress contour map of the maximum stress region in the mica plate in Experimental Example 8-2 in the impact simulation.

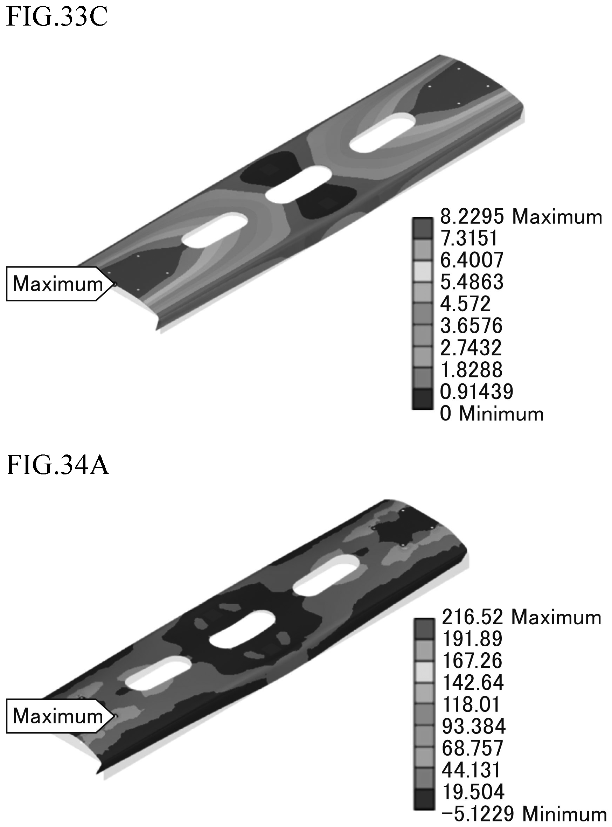

FIG. 33C illustrates a displacement contour map of the entire mica plate in Experimental Example 8-2 in the impact simulation.

FIG. 34A illustrates a stress contour map of the entire mica plate in Experimental Example 8-3 in the impact simulation.

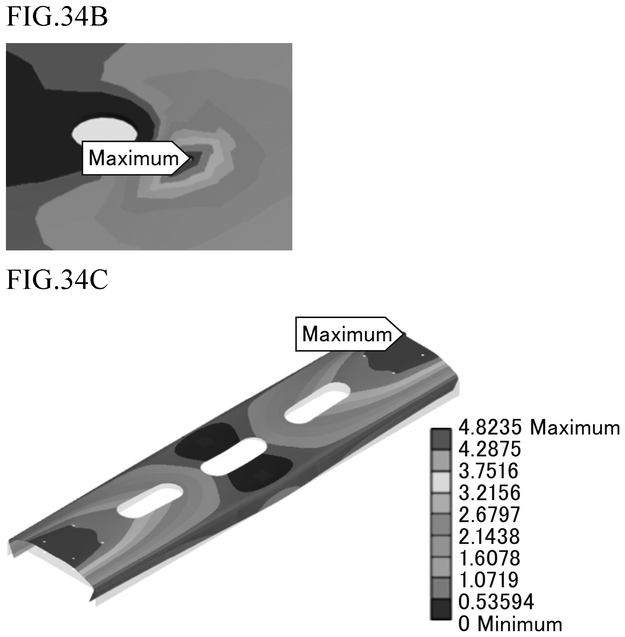

FIG. 34B illustrates an enlarged stress contour map of the maximum stress region in the mica plate in Experimental Example 8-3 in the impact simulation.

FIG. 34C illustrates a displacement contour map of the entire mica plate in Experimental Example 8-3 in the impact simulation.

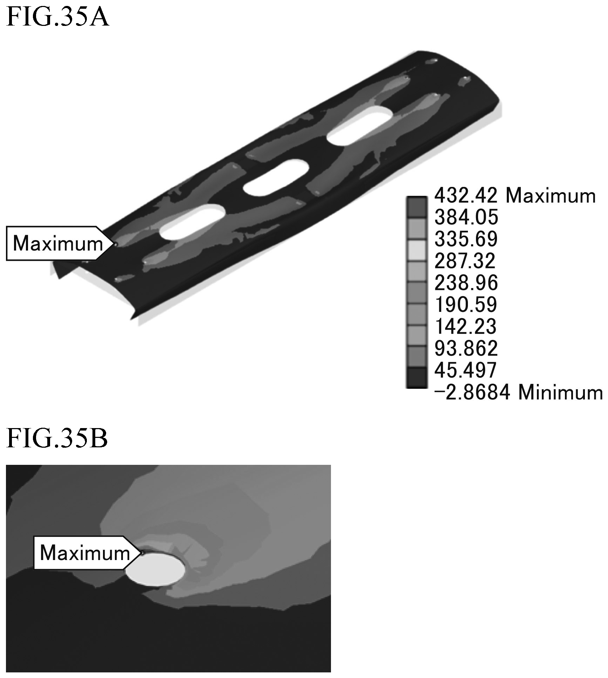

FIG. 35A illustrates a stress contour map of the entire mica plate in Experimental Example 9-1 in the impact simulation.

FIG. 35B illustrates an enlarged stress contour map of the maximum stress region in the mica plate in Experimental Example 9-1 in the impact simulation.

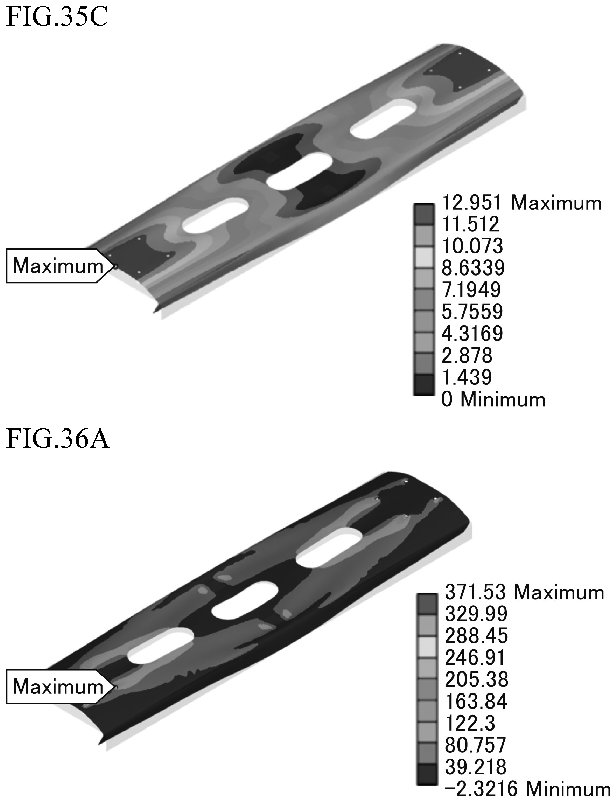

FIG. 35C illustrates a displacement contour map of the entire mica plate in Experimental Example 9-1 in the impact simulation.

FIG. 36A illustrates a stress contour map of the entire mica plate in Experimental Example 9-2 in the impact simulation.

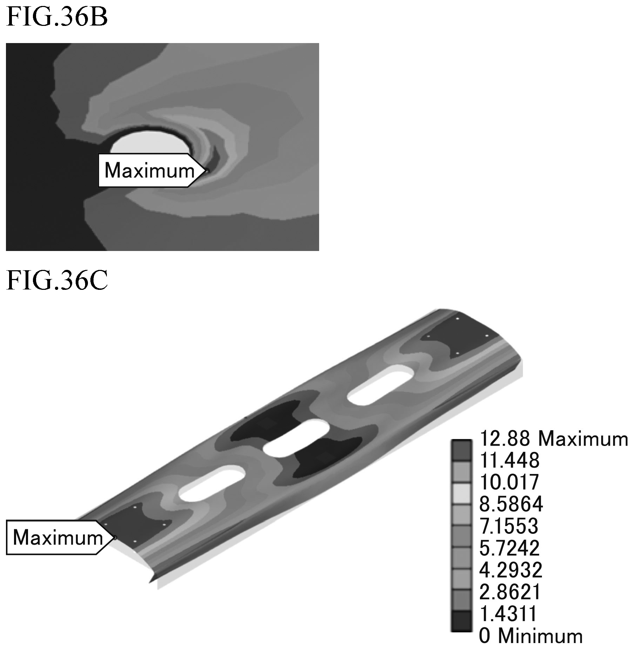

FIG. 36B illustrates an enlarged stress contour map of the maximum stress region in the mica plate in Experimental Example 9-2 in the impact simulation.

FIG. 36C illustrates a displacement contour map of the entire mica plate in Experimental Example 9-2 in the impact simulation.

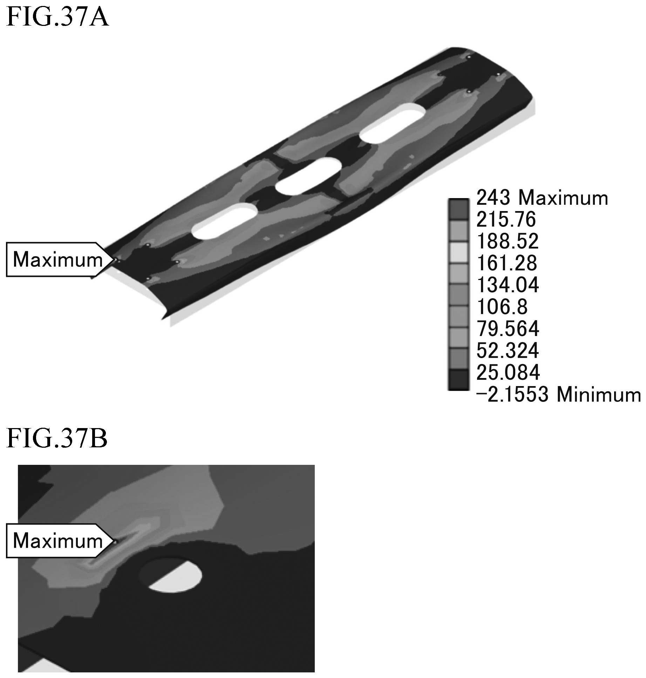

FIG. 37A illustrates a stress contour map of the entire mica plate in Experimental Example 9-3 in the impact simulation.

FIG. 37B illustrates an enlarged stress contour map of the maximum stress region in the mica plate in Experimental Example 9-3 in the impact simulation.

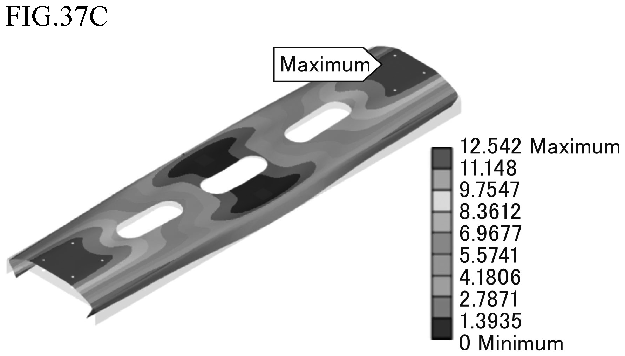

FIG. 37C illustrates a displacement contour map of the entire mica plate in Experimental Example 9-3 in the impact simulation.

The mica plate is considered to break when the maximum stress applied to the mica plate reaches about 180 MPa.

In the experimental examples using a mica plate having a thickness of 1 mm (Experimental Example 1-1 to Experimental Example 1-4, Experimental Example 2-1 to Experimental Example 2-3, Experimental Example 3-1 to Experimental Example 3-3, Experimental Example 4-1 to Experimental Example 4-3, and Experimental Example 5-1 to Experimental Example 5-3), a regression curve was drawn from the relationship between the ratio of the area S1 to the area S2 and the maximum stress. From the regression curve, the ratio "area S1/area S2" at which the maximum stress reaches 180 MPa was calculated to be S1/S2 = 5.8 × 10⁻⁶. The result revealed that the mica plate with the area S1 being not less than 5.8 × 10⁻⁶ times the area S2 is resistant to damage.

In the experimental examples using a mica plate having a thickness of 0.5 mm (Experimental Example 7-1 to Experimental Example 7-3), a regression curve was drawn from the relationship between the ratio of the area S1 to the area S2 and the maximum stress. From the regression curve, the ratio "area S1/area S2" at which the maximum stress reaches 180 MPa was calculated to be S1/S2 = 2.5 × 10⁻³. The result revealed that the mica plate with the area S1 being not less than 2.5 × 10⁻³ times the area S2 is resistant to damage.

In the experimental examples using a mica plate having a thickness of 0.3 mm (Experimental Example 8-1 to Experimental Example 8-3), a regression curve was drawn from the relationship between the ratio of the area S1 to the area S2 and the maximum stress. From the regression curve, the ratio "area S1/area S2" at which the maximum stress reaches 180 MPa was calculated to be S1/S2 = 6.0 × 10⁻³. The result revealed that the mica plate with the area S1 being not less than 6.0 × 10⁻³ times the area S2 is resistant to damage.

In the experimental examples using a mica plate having a thickness of 0.1 mm (Experimental Example 9-1 to Experimental Example 9-3), a regression curve was drawn from the relationship between the ratio of the area S1 to the area S2 and the maximum stress. From the regression curve, the ratio "area S1/area S2" at which the maximum stress reaches 180 MPa was calculated to be S1/S2 = 8.1 × 10⁻³. The result revealed that the mica plate with the area S1 being not less than 8.1 × 10⁻³ times the area S2 is resistant to damage.

### REFERENCE SIGNS LIST

10, 510, 610 battery pack
20, 520, 620 module
20a, 520a, 620a connecting module member
20b busbar
21, 521, 621 battery cell
21a terminal
25, 525, 625 connecting member
26a, 26b, 26c second fixing member hole
30, 530, 630 case
31, 531, 631 housing member
32, 532, 632 lid member
40, 140, 240, 340, 440, 540, 640, 740 mica plate
40a first side
40b second side
41, 141, 341 first main face
42, 342 second main face
43a, 43a₁, 43a₂, 43a₃, 43a₄, 43b, 43c, 543a, 743a fixing member hole
60, 70, 80 fixing member
61, 71, 81 head
62, 72, 82 body
82a split portion
151, 251 ridge
356, 456 first protrusion
357, 457 second protrusion
520c safety valve
545, 745 safety valve hole

## Claims

1. A battery pack, comprising:
a module with a plurality of battery cells;
a case containing the module; and
a mica plate disposed between the module and the case and having a first main face and a second main face opposite to the first main face,
the battery pack further comprising a fixing member to fix the mica plate,
the mica plate having a first fixing member hole penetrating from the first main face to the second main face,
at least one of the module or the case being provided with a connecting member having a second fixing member hole,
the fixing member including a head and a body extending from the head,
the head of the fixing member being on the first main face of the mica plate,
the body of the fixing member passing through the first fixing member hole into the second fixing member hole, thereby fixing the mica plate,
the head, in a planar perspective view of the mica plate, covering at least a part of an outline of the first fixing member hole and overlapping the mica plate,
an overlapping area, denoted as area S1, between the head and the mica plate being not less than 5.8 × 10⁻⁶ times an area S2 of the mica plate.

2. The battery pack according to claim 1,
wherein the fixing member has at least one shape selected from the group consisting of a rivet shape, a spring pin shape, a push pin shape, a lock pin shape, and a stepped pin shape.

3. The battery pack according to claim 1,
wherein the fixing member has a rivet shape,
the second fixing member hole is a through hole,
the body of the fixing member passes through the first fixing member hole and the second fixing member hole, and
the body has a crimped portion at its tip.

4. The battery pack according to claim 1,
wherein the fixing member has a screw shape,
the second fixing member hole is a screw hole, and
the body of the fixing member is screwed into the second fixing member hole.

5. The battery pack according to any one of claims 1 to 4,
wherein the mica plate is fixed by a plurality of the fixing members, and
in a plan view of the mica plate, an overlapping area, denoted as area S1n, between the head of each fixing member and the mica plate is larger than an opening area S3 of each first fixing member hole.

6. A battery pack, comprising:
a module with a plurality of battery cells;
a case containing the module; and
a mica plate disposed between the module and the case and having a first main face and a second main face opposite to the first main face,
the battery pack further comprising a fixing member to fix the mica plate,
the mica plate having a first fixing member hole penetrating from the first main face to the second main face,
at least one of the module or the case being provided with a connecting member having a second fixing member hole,
the fixing member having a rivet shape and including a head and a body extending from the head,
the head of the fixing member being on the first main face of the mica plate,
the body of the fixing member passing through the first fixing member hole and the second fixing member hole,
the body having a crimped portion at its tip,
a shortest distance from an outline of the first fixing member hole to an end of the crimped portion being more than 0 mm and 22 mm or less in a planar perspective view of the mica plate.

7. The battery pack according to claim 6,
wherein, in a planar perspective view of the mica plate, the shortest distance from an outline of the first fixing member hole to an end of the crimped portion is longer than a shortest distance from the outline of the first fixing member hole to an end of the head.

8. The battery pack according to claim 6 or 7,
wherein the mica plate is fixed by a plurality of the fixing members.

9. The battery pack according to any one of claims 1 to 8,
wherein the mica plate is substantially tetragonal in a plan view,
the mica plate in a plan view has an outline including a first side and a second side opposite to the first side, and
the mica plate has a pair of the first fixing holes, with one of the holes being at an end portion to which the first side belongs and the other being at an end potion to which the second side belongs.

10. The battery pack according to any one of claims 1 to 9,
wherein an annular washer is disposed between the head and the mica plate, and
the body passes through an annular opening of the washer.

11. The battery pack according to any one of claims 1 to 10,
wherein the mica plate has a ridge extending in a first direction on its first main face side.

12. The battery pack according to any one of claims 1 to 10,
wherein the mica plate has a first protrusion on its first main face side.

13. The battery pack according to any one of claims 1 to 12,
wherein the mica plate has a thickness T of 0.1 mm or more and 3.0 mm or less.

14. The battery pack according to any one of claims 1 to 13,
wherein the mica plate has a Young's modulus of 110 GPa or less.

15. The battery pack according to any one of claims 1 to 14,
wherein the module has a safety valve on its surface,
the mica plate is present between the surface with the safety valve of the module and the case, and
the mica plate has a safety valve hole to expose the safety valve.

16. The battery pack according to claim 15,
wherein the case includes a housing member and a lid member covering the housing member,
the module is contained in the housing member such that the safety valve is closer to the lid member, and
the mica plate is disposed between the module and the lid member.

17. A structure, comprising:
a mica plate having a first main face and a second main face opposite to the first main face and having a first fixing member hole penetrating from the first main face to the second main face;
a substrate including a connecting member having a second fixing member hole; and
a fixing member fixing the mica plate,
the fixing member including a head and a body extending from the head,
the head of the fixing member being on the first main face of the mica plate,
the body of the fixing member passing through the first fixing member hole into the second fixing member hole, thereby fixing the mica plate,
the head, in a planar perspective view of the mica plate, covering at least a part of an outline of the first fixing member hole and overlapping the mica plate,
an overlapping area, denoted as area S1, between the head and the mica plate being not less than 5.8 × 10⁻⁶ times an area S2 of the mica plate.

18. A structure, comprising:
a mica plate having a first main face and a second main face opposite to the first main face and having a first fixing member hole penetrating from the first main face to the second main face;
a substrate including a connecting member having a second fixing member hole; and
a fixing member fixing the mica plate,
the fixing member having a rivet shape and including a head and a body extending from the head,
the head of the fixing member being on the first main face of the mica plate,
the body of the fixing member passing through the first fixing member hole and the second fixing member hole,
the body having a crimped portion at its tip,
a shortest distance from an outline of the first fixing member hole to an end of the crimped portion being more than 0 mm and 22 mm or less in a planar perspective view of the mica plate.

19. A method for producing a mica plate, the method comprising:
molding a mica prepreg in a mold through hot pressing into a mica plate having a first main face and a second main face opposite to the first main face; and
forming a first fixing member hole penetrating from the first main face to the second main face in the mica plate.
